# EUROPÄISCHE PATENTSCHRIFT

(11) **EP 4 142 987 B1**
(45) Veröffentlichungstag und Bekanntmachung des Hinweises auf die Patenterteilung: **26.07.2023**
(21) Anmeldenummer: 21731765.0
(22) Anmeldetag: 09.06.2021
(51) Int. Cl.: B25J 9/08, B25J 19/00, G02B 6/36

(54) **ARMMODUL FÜR EINEN MODULAREN ROBOTERARM EINES INDUSTRIEROBOTERS**
ARM MODULE FOR A MODULAR ROBOTIC ARM OF AN INDUSTRIAL ROBOT
ENSEMBLE BRAS CONÇU POUR UN BRAS DE ROBOT MODULAIRE D'UN ROBOT INDUSTRIEL

(30) Priorität: 10.06.2020 DE 102020115448
(43) Veröffentlichungstag der Anmeldung: 08.03.2023
(73) Patentinhaber: Beckhoff Automation GmbH, 33415 Verl (DE)
(72) Erfinder: RETTIG, Thomas, 33378 Rheda-Wiedenbrück (DE); BUNTE, Thorsten, 33335 Gütersloh (DE); POHL, Christopher, 33415 Verl (DE); KASTLER, Peter, 1220 Wien (AT); MAIER, Clemens, 6700 Bludenz (AT); ZECH, Christoph, 1130 Wien (AT); MORSCHER, Thomas, 1080 Wien (AT); PEHLIVAN, Armin, 6714 Nüziders (AT); JÄGER, Michael, 6706 Bürs (AT); FISCHER, Peter, 8230 Hartberg (AT)
(74) Vertreter: Patentanwaltskanzlei WILHELM & BECK
(86) Internationale Anmeldenummer: PCT/EP2021/065422
(87) Internationale Veröffentlichungsnummer: WO 2021/250075

(56) Entgegenhaltungen:
- EP-A1- 0 722 811
- DE-U1-202014 010 032

## Beschreibung

Die Erfindung betrifft ein Armmodul für einen modularen Roboterarm eines Industrieroboters. Darüber hinaus betrifft die Erfindung einen Industrieroboter.

Die technische Disziplin der Automatisierungstechnik (Implementieren, Messen, Steuern/Regeln, Kommunikation, Mensch/Maschine-Schnittstelle, Sicherheit etc.) hat zur Aufgabe, Maschinen inkl. Industrieroboter und/oder Anlagen zu automatisieren, d. h. aus sich heraus selbständig und ohne Mitwirkung eines Menschen betreiben zu können. Ein Grad der Automatisierung (Verhältnis der automatisierten Fertigungsschritte zu allen Fertigungsschritten) in einem Automatisierungssystem ist umso höher, je unabhängiger eine jeweilige Maschine in einer Anlage und/oder eine betreffende Anlage von menschlichen Eingriffen ist bzw. sind.

Ziele der Automatisierungstechnik sind unter anderem eine Entlastung des Menschen von gefährlichen, anstrengenden und/oder eintönigen Tätigkeiten, eine Verbesserung einer Qualität durch die technische Anlage, eine höhere Leistungsfähigkeit der Anlage und eine Kostenreduktion durch die Anlage. Durch Fortschritte bei Maschinen, einer Signalerfassung, einer Signalverarbeitung und/oder einer Kommunikation (Vernetzung) von Komponenten innerhalb des Automatisierungssystems, kann der Automatisierungsgrad einer bestehenden oder einer neuen Anlage im Vergleich mit dem Stand der Technik deutlich gesteigert werden.

Anwendungsspezifische Industrieroboter (Manipulatoren) sind ein fester Bestandteil von automatisierten Anlagen. Ein Industrieroboter ist eine programmierbare Maschine zur Handhabung, Montage und/oder Bearbeitung von Werkstücken. Der Industrieroboter umfasst im Allgemeinen eine Roboterbasis, einen Roboterarm (Manipulator) mit einer Mehrzahl von gegeneinander schwenkbaren und/oder drehbaren (Drehwinkel beschränkt, ggf. etwas größer als ca. 360°), proximalen (zu einer Roboterbasis hin) und distalen (von der Roboterbasis entfernt) Armgliedern, einen (End-)Effektor (Roboterhand, Werkzeug, Greifer, etc.), eine lokale Steuerung/Regelung und ggf. eine globale Steuerung/Regelung. Oft sind Industrieroboter mit unterschiedlichen Sensoren ausgerüstet. Programmiert ist der Industrieroboter in der Lage, einen Arbeitsablauf autonom durchzuführen oder eine Durchführung einer Aufgabe in Abhängigkeit von Informationen beispielsweise eines Sensors zu verändern.

Einander betreffende, gegeneinander schwenkbare oder drehbare Armglieder besitzen eine gemeinsame mechanische Schnittstelle, wobei jenseits der mechanischen Schnittstelle optische Signale und/oder elektrische Spannung (Steuerungsinformationen) sowie elektrische Energie transportiert und ggf. ein Fluid (Gas(e) und/oder Flüssigkeit(en)) hinweg geführt werden müssen. Hierfür werden Schleppketten benötigt, um die entsprechenden Leitungen zu führen und nicht zu zerstören. Dabei sind keine beliebigen Umdrehungen (Rotationen) einander betreffender Armglieder möglich. Weiterhin bedeuten verschiedene Schnittstellen mehrere Hersteller.

Aus der Druckschrift DE 20 2014 010032 U1 ist eine Kupplung mit kontaktloser Energie- und Datenübertragung bekannt, mit den Merkmalen des Oberbegriffes des Anspruches 1.

Es ist daher eine Aufgabe der Erfindung, einen Roboterarm mit einer Mehrzahl an einzelnen Armmodulen zu realisieren, dessen Armmodule gegeneinander rotierbar sind, wobei Steuerungsinformationen die gegeneinander rotierbaren Armmodule passieren können.

Die Aufgabe der Erfindung ist mit einem Armmodul für einen modularen Roboterarm eines Industrieroboters und mit einem Industrieroboter nach den unabhängigen Ansprüchen gelöst. Vorteilhafte Weiterbildungen sind in den abhängigen Ansprüchen angegeben.

Gemäß einem Aspekt der vorliegenden Erfindung wird ein Armmodul bereitgestellt, wobei das Armmodul ein Gehäuse, das zumindest eine erste Anschlussseite und zumindest eine zweite Anschlussseite aufweist, wobei die erste Anschlussseite relativ gegenüber der zweiten Anschlussseite um eine Rotationsachse steuerbar verdrehbar ausgelegt ist, wobei die erste Anschlussseite eine rotierbare erste Anschlusseinrichtung und die zweite Anschlussseite eine gehäusefeste zweite Anschlusseinrichtung aufweist, und eine rotationskompatible Datenübertragungseinrichtung für eine Übertragung von Datensignalen entlang eines Übertragungspfads zwischen der ersten Anschlussseite und der zweiten Anschlussseite aufweist, wobei der Übertragungspfad wenigstens einen drahtlosen Übertragungsteilpfad zur drahtlosen Übertragung von Datensignalen und wenigstens einen drahtgeführten Übertragungsteilpfad zur drahtgeführten Übertragung von Datensignalen umfasst, wobei die rotationskompatible Datenübertragungseinrichtung wenigstens eine erste Drahtlostransceivereinheit und wenigstens eine zweite Drahtlostransceivereinheit aufweist, die jeweils über den Übertragungspfad miteinander verbunden und eingerichtet sind, entlang des wenigstens einen Drahtlosübertragungsteilpfads Datensignale drahtlos auszusenden und zu empfangen.

Hierdurch wird der technische Vorteil erreicht, dass ein Armmodul für einen Industrieroboter bereitgestellt werden kann, in dem eine Datenübertragung zwischen zwei gegeneinander rotierbarer Anschlussseiten des Armmoduls ermöglicht ist.

Das Armmodul weist ein Gehäuse mit zumindest einer ersten Anschlussseite und zumindest einer zweiten Anschlussseite auf. Es könnten auch Armmodule mit mehr als einer ersten Anschlussseite und/oder mehr als einer zweiten Anschlussseite vorgesehen sein. Die Erfindung wird im Weiteren anhand eines Armmoduls mit einer ersten Anschlussseite und einer zweiten Anschlussseite beschrieben. Sie ist aber nicht genau auf diese Ausführungsform bzw. Anzahl an ersten und zweiten Anschlussseiten eingeschränkt. Die erste Anschlussseite ist relativ gegenüber der zweiten Anschlussseite um eine Rotationsachse steuerbar verdrehbar ausgelegt. Die erste Anschlussseite weist eine rotierbare erste Anschlusseinrichtung und die zweite Anschlussseite eine gehäusefeste zweite Anschlusseinrichtung auf. Weiterhin ist eine rotationskompatible Datenübertragungseinrichtung für eine rotationskompatible Übertragung von Datensignalen zwischen der ersten Anschlussseite und der zweiten Anschlussseite vorgesehen.

Über die rotationskompatible Datenübertragungseinrichtung ist eine Übertragung von Datensignalen zwischen den gegeneinander rotierbaren ersten und zweiten Anschlussseiten ermöglicht. Eine Beeinträchtigung der Datenübertragung durch die Rotation der ersten Anschlussseite relativ zur zweiten Anschlussseite kann vermieden werden.

Hierzu umfasst die rotationskompatible Datenübertragungseinrichtung wenigstens eine erste Drahtlostransceivereinheit und wenigstens eine zweite Drahtlostransceivereinheit, die jeweils eingerichtet sind, zur drahtlosen Übertragung Datensignale drahtlos auszusenden und zu empfangen. Über die ersten und zweiten Drahtlostransceivereinheiten ist wenigstens ein drahtloser Übertragungspfad für eine drahtlose Übertragung von Datensignalen zwischen gegeneinander rotierbaren Drahtlostransceivereinheiten definiert. Die gegeneinander rotierbaren Drahtlostransceivereinheiten, die Datensignale miteinander austauschen, können sowohl in einem Armmodul angeordnet sein als auch zwei Drahtlostransceivereinheiten zweier miteinander rotierbar verbundener Armmodule eines Industrieroboters sein.

Über den wenigstens einen durch zwei Drahtlostransceivereinheiten definierten drahtlosen Übertragungspfad ist eine Datenübertragung zwischen zwei gegeneinander rotierenden Drahtlostransceivereinheiten ermöglicht, ohne dass hierdurch eine Beeinträchtigung der Datenübertragung entsteht.

Durch Kopplung mehrerer derart ausgestalteter Armmodule ist ein modularer Roboterarm für einen Industrieroboter realisierbar, der beliebig rotierbar ist, so dass sich auch Drehwinkel (Rotationswinkel) deutlich größer als 360° realisieren lassen, wobei eine Datenübertragung zwischen allen Armmodulen des modularen Roboterarms dauerhaft und durchgehend und für beliebige Drehwinkel gewährleistet ist.

Alternativ kann das Armmodul ferner eine elektrische rotationskompatible Übertragungseinrichtung und/oder eine fluidische rotationskompatible Übertragungseinrichtung umfassen. Über die elektrische rotationskompatible Übertragungseinrichtung und/oder die fluidische rotationskompatible Übertragungseinrichtung ist eine rotationskompatible Übertragung von elektrischer Energie und/oder Fluid, beispielsweise Druckluft, zwischen den gegeneinander rotierbaren ersten und zweiten Anschlussseiten des Armmoduls ermöglicht. Hierdurch ist eine Versorgung eines wie oben beschriebenen Roboterarms eines Industrieroboters mit elektrischer Energie und Arbeitsfluid für eine beliebige Rotation einzelner Armmodule gegeneinander ermöglicht.

Das Armmodul kann ferner multifunktionale Schnittstellen sowohl an der ersten Anschlussseite als auch an der zweiten Anschlussseite aufweisen, die eine Übertragung von Datensignalen, wie auch elektrischer Energie und/oder Arbeitsfluid zwischen zwei miteinander verbundenen Armmodulen eines Roboterarms ermöglichen.

Die rotierbare erste Anschlusseinrichtung kann erste mechanische Verbindungselemente und die gehäusefeste zweite Anschlusseinrichtung kann zweite mechanische Verbindungselemente aufweisen. Die ersten mechanischen Verbindungselemente und die zweiten mechanischen Verbindungselemente sind komplementär zueinander ausgebildet, wobei die erste Kontakteinrichtung radial innerhalb der ersten mechanischen Verbindungselemente und die zweite Kontakteinrichtung radial innerhalb der zweiten mechanischen Verbindungselemente angeordnet sind.

Über eine Kopplung zweier Armmodule, wobei jeweils die erste Anschlussseite des einen Armmoduls mit der zweiten Anschlussseite des jeweils anderen Armmoduls gekoppelt sind, ist eine rotierbare Kopplung der zwei Armmodule erreicht.

Eine rotationskompatible Datenübertragung ist im Sinne der Anmeldung eine Datenübertragung entlang eines Übertragungspfads zwischen zwei gegeneinander rotierbaren Abschnitten des Übertragungspfads.

Ein Übertragungspfad ist im Sinne der Anmeldung ein Pfad, entlang dem eine Übertragung von Datensignalen stattfindet. Eine solche Übertragung kann drahtlos entlang eines drahtlosen Übertragungsteilpfads oder über eine entsprechende Übertragungsverkabelung drahtgeführt entlang eines drahtgeführten Übertragungsteilpfads stattfinden.

Nach einer Ausführungsform umfasst das Armmodul eine Antriebseinrichtung mit einer Abtriebswelle, die drehfest mit der rotierbaren ersten Anschlusseinrichtung der ersten Anschlussseite verbunden ist, wobei die Antriebswelle einen Abschnitt der rotationskompatiblen Datenübertragungseinrichtung bildet, und wobei der wenigstens eine drahtlose Übertragungsteilpfad oder der wenigstens eine drahtgeführte Übertragungsteilpfad des Übertragungspfads der rotationskompatiblen Datenübertragungseinrichtung durch eine zentrale Längsdurchgangsausnehmung der Antriebswelle geführt ist.

Hierdurch wird der technische Vorteil erreicht, dass ein Armmodul mit einer platzsparenden rotationskompatiblen Datenübertragungseinrichtung bereitgestellt werden kann. Indem ein drahtgeführter Übertragungsteilpfad oder ein drahtloser Übertragungsteilpfad des Übertragungspfads der rotationskompatiblen Datenübertragungseinrichtung durch eine zentrale Längsdurchgangsausnehmung einer Antriebswelle einer Antriebseinrichtung des Armmoduls geführt wird, kann erreicht werden, dass der jeweilige drahtgeführte Übertragungsteilpfad oder drahtlose Übertragungsteilpfad auf einer Rotationsachse der rotierbaren ersten Anschlusseinrichtung der ersten Anschlussseite des Armmoduls angeordnet ist.

Hierdurch kann erreicht werden, dass eine über den Übertragungspfad mit der rotierbaren ersten Anschlusseinrichtung verbundene Drahtlostransceivereinheit ebenfalls auf der Rotationsachse der rotierbaren ersten Anschlusseinrichtung positioniert werden kann.

Bei einer Rotation der Drahtlostransceivereinheit um die Rotationsachse bleibt die Drahtlostransceivereinheit somit auf der Rotationsachse positioniert, sodass eine Datenübertragung zwischen der auf der Rotationsachse positionierten Drahtlostransceivereinheit und einer weiteren Drahtlostransceivereinheit bei beliebiger Rotation der Drahtlostransceivereinheiten gegeneinander ermöglicht ist.

Hierbei können beide Drahtlostransceivereinheiten in einem Armmodul positioniert sein. Alternativ können beide Drahtlostransceivereinheiten jeweils in einem von zwei rotierbar miteinander gekoppelten Armmodulen positioniert sein. Hierdurch kann eine rotationskompatible Übertragung von Datensignalen zwischen der ersten Anschlussseite eines Armmoduls und der zweiten Anschlussseite eines anderen Armmoduls erreicht werden. Darüber hinaus kann eine rotationskompatible Übertragung von Datensignalen zwischen zwei miteinander rotierbar gekoppelten Armmodulen erreicht werden.

Über die Antriebswelle der Antriebseinrichtung, die drehfest mit der rotierbaren ersten Anschlusseinrichtung der ersten Anschlussseite verbunden ist, kann eine Rotation der ersten Anschlussseite relativ zum Gehäuse und relativ zur zweiten Anschlussseite des Armmoduls erreicht werden.

Nach einer Ausführungsform weist die Antriebswelle ein der ersten Anschlusseinrichtung der ersten Anschlussseite gegenüberliegend angeordnetes Wellenende auf, wobei die erste Drahtlostransceivereinheit am Wellenende der Antriebswelle angeordnet ist, wobei die zweite Drahtlostransceivereinheit drehfest am Gehäuse angeordnet ist, und wobei der drahtlose Übertragungsteilpfad zwischen der ersten Drahtlostransceivereinheit und der zweiten Drahtlostransceivereinheit definiert ist.

Hierdurch wird der technische Vorteil erreicht, dass ein Armmodul mit einer einfach zu realisierenden rotationskompatiblen Datenübertragungseinrichtung bereitgestellt werden kann. Indem die erste Drahtlostransceivereinheit am Wellenende der Antriebswelle angeordnet ist und die zweite Drahtlostransceivereinheit drehfest am Gehäuse angeordnet ist, sodass der drahtlose Übertragungsteilpfad zwischen den ersten und zweiten Drahtlostransceivereinheiten definiert ist, wird erreicht, dass die erste Drahtlostransceivereinheit mit der Antriebswelle relativ zur am Gehäuse drehfest angeordneten zweiten Drahtlostransceivereinheit rotierbar ist und über den drahtlosen Übertragungsteilpfad zwischen den ersten und zweiten Drahtlostransceivereinheiten bei beliebiger Rotation der ersten und zweiten Drahtlostransceivereinheiten gegeneinander eine Datenübertragung ermöglicht ist. Eine rotationskompatible Übertragung von Datensignalen zwischen der ersten Anschlussseite, die drehfest mit der Antriebswelle und somit rotierbar zum Gehäuse angeordnet ist, und der drehfest am Gehäuse angeordneten zweiten Anschlussseite ist somit für beliebige Rotationen der ersten Anschlussseite relativ zur zweiten Anschlussseite ermöglicht.

Nach einer Ausführungsform umfasst der Übertragungspfad wenigstens einen ersten drahtgeführten Übertragungsteilpfad und wenigstens einen zweiten drahtgeführten Übertragungsteilpfad, wobei der erste drahtgeführte Übertragungsteilpfad die erste Drahtlostransceivereinheit mit der ersten Anschlusseinrichtung der ersten Anschlussseite verbindet, und wobei der zweite drahtgeführte Übertragungsteilpfad die zweite Drahtlostransceivereinheit mit der zweiten Anschlusseinrichtung der zweiten Anschlussseite verbindet.

Hierdurch wird der technische Vorteil erreicht, dass ein Armmodul mit einer einfach zu realisierenden rotationskompatiblen Datenübertragungseinrichtung bereitgestellt wird. Hierzu umfasst der Übertragungspfad wenigstens einen ersten drahtgeführten Übertragungsteilpfad und wenigstens einen zweiten drahtgeführten Übertragungsteilpfad, wobei der erste drahtgeführte Übertragungsteilpfad die erste Drahtlostransceivereinheit mit der ersten Anschlusseinrichtung verbindet, und wobei der zweite drahtgeführte Übertragungsteilpfad die zweite Drahtlostransceivereinheit mit der zweiten Anschlusseinrichtung verbindet. Über die ersten und zweiten drahtgeführten Übertragungsteilpfade ist somit eine drahtgeführte Datenübertragung zwischen den ersten und zweiten Drahtlostransceivereinheiten und den ersten und zweiten Anschlusseinrichtungen der ersten und zweiten Anschlussseiten ermöglicht. Durch die ersten und zweiten drahtgeführten Übertragungsteilpfade ist eine robuste Datenübertragung mit geringer Übertragungsfehleranfälligkeit innerhalb des Armmoduls gewährleistet.

Nach einer Ausführungsform verläuft der erste drahtgeführte Übertragungsteilpfad durch die zentrale Längsdurchgangsausnehmung der Antriebswelle.

Hierdurch wird der technische Vorteil erreicht, dass eine Rotation der ersten Drahtlostransceivereinheit relativ zur zweiten Drahtlostransceivereinheit um einen beliebigen Rotationswinkel ermöglicht ist. Indem der erste drahtgeführte Übertragungsteilpfad durch eine zentrale Längsdurchgangsausnehmung der Antriebswelle hindurchgeführt ist, kann verhindert werden, dass eine Verdrillung des ersten drahtgeführten Übertragungsteilpfads bei Rotation der ersten Anschlussseite relativ zum Gehäuse des Armmoduls auftritt. Indem sowohl die erste Drahtlostransceivereinheit als auch der erste drahtgeführte Übertragungsteilpfad drehfest an der Antriebswelle angeordnet sind, bewirkt eine Rotation der Antriebswelle um die Rotationsachse eine simultane Rotation sowohl der ersten Drahtlostransceivereinheit als auch des ersten drahtgeführten Übertragungsteilpfads, der auf der Rotationsachse der Antriebswelle angeordnet ist.

Nach einer Ausführungsform sind die erste Drahtlostransceivereinheit und die zweite Drahtlostransceivereinheit auf einer ersten Rotationsachse der Antriebswelle einander gegenüberliegend angeordnet, wobei der drahtlose Übertragungsteilpfad parallel zur ersten Rotationsachse orientiert ist.

Hierdurch wird der technische Vorteil erreicht, dass ein Armmodul mit einer rotationskompatiblen Datenübertragung bereitgestellt werden kann. Indem die ersten und zweiten Drahtlostransceivereinheiten auf der ersten Rotationsachse der Antriebswelle einander gegenüberliegend angeordnet sind, wird erreicht, dass der drahtlose Übertragungsteilpfad zwischen den ersten und zweiten Drahtlostransceivereinheiten ebenfalls auf der ersten Rotationsachse orientiert ist. Bei Rotation der ersten Drahtlostransceivereinheit relativ zur zweiten Drahtlostransceivereinheit wird dabei erreicht, dass eine Ausrichtung der beiden ersten und zweiten Drahtlostransceivereinheiten relativ zueinander durch die Rotation nicht verändert wird, da die erste Rotationsachse der Antriebswelle durch die geometrischen Zentren der ersten und zweiten Drahtlostransceivereinheiten verläuft und diese somit in unveränderter Ausrichtung während der Rotation auf der ersten Rotationsachse angeordnet verbleiben. Hierdurch wird erreicht, dass bei Rotation um einen beliebigen Winkel der drahtlose Übertragungsteilpfad zwischen den ersten und zweiten Drahtlostransceivereinheiten auf der ersten Rotationsachse positioniert verbleibt. Hierdurch ist eine robuste und übertragungsfehlerstabile drahtlose Übertragung von Datensignalen zwischen den ersten und zweiten Drahtlostransceivereinheiten gewährleistet.

Nach einer Ausführungsform ist die erste Drahtlostransceivereinheit auf einer ersten Rotationsachse der Antriebswelle angeordnet, wobei die zweite Drahtlostransceivereinheit in einem Winkel zur ersten Rotationsachse angeordnet ist, wobei die rotationskompatible Datenübertragungseinrichtung eine auf der ersten Rotationsachse angeordnete Umlenkeinrichtung zum Ablenken von drahtlos übertragbaren Datensignalen aufweist, und wobei der drahtlose Übertragungsteilpfad zwischen der ersten Drahtlostransceivereinheit, der Umlenkeinrichtung und der zweiten Drahtlostransceivereinheit definiert ist.

Hierdurch wird der technische Vorteil erreicht, dass eine möglichst platzsparende rotationskompatible Datenübertragungseinrichtung bereitgestellt werden kann. Indem die erste Drahtlostransceivereinheit auf der Rotationsachse der Antriebswelle angeordnet ist, während die zweite Drahtlostransceivereinheit drehfest am Gehäuse in einem Winkel zur Rotationsachse der Antriebswelle angeordnet ist, kann erreicht werden, dass eine Länge des drahtlosen Übertragungsteilpfads zwischen den ersten und zweiten Drahtlostransceivereinheiten bei einem minimalen Abstand der ersten und zweiten Drahtlostransceivereinheiten maximiert werden kann. Dies wird über die Umlenkeinrichtung erreicht, die zwischen den ersten und zweiten Drahtlostransceivereinheiten angeordnet ist und drahtlos Datensignale in einem Winkel zwischen den ersten und zweiten Drahtlostransceivereinheiten umlenkt. Durch eine vergrößerte Länge des drahtlosen Übertragungspfads können Übertragungsfehler der drahtlos übertragenen Datensignale verringert und/oder ausgeschlossen werden. Hierdurch kann eine fehlerrobuste Datenübertragung erreicht werden.

Nach einer Ausführungsform umfasst der erste drahtgeführte Übertragungsteilpfad wenigstens eine erste Übertragungsleitung und wenigstens eine erste Kontaktierungseinheit, wobei der zweite drahtgeführte Übertragungsteilpfad wenigstens eine zweite Übertragungsleitung und wenigstens eine zweite Kontaktierungseinheit umfasst, wobei die erste Kontaktierungseinheit an der ersten Anschlusseinrichtung angeordnet ist, und wobei die zweite Kontaktierungseinheit an der zweiten Anschlusseinrichtung angeordnet ist.

Hierdurch wird der technische Vorteil erreicht, dass eine robuste und verlässliche Datenübertragung zwischen der ersten Drahtlostransceivereinheit und der ersten Anschlusseinrichtung und/oder zwischen der zweiten Drahtlostransceivereinheit und der zweiten Anschlusseinrichtung über die ersten und/oder zweiten drahtgeführten Übertragungsteilpfade erreicht wird. Über die ersten und zweiten Kontaktierungseinheiten, die an den ersten und zweiten Anschlusseinrichtungen angeordnet sind, ist eine verlässliche Datenschnittstelle zu weiteren Armmodulen ermöglicht, die eine zuverlässige Datenübertragung zwischen Armmodulen des Roboterarms ermöglicht. Datensignale können über die Kontaktierungseinheiten zweier miteinander verbundener Armmodule als drahtgeführte Datensignale zwischen den Armmodulen ausgetauscht werden.

Nach einer Ausführungsform umfassen die erste Kontaktierungseinheit und die zweite Kontaktierungseinheit jeweils wenigstens zwei Sendekanäle und/oder wenigstens zwei Empfangskanäle zum Senden und/oder Empfangen von Datensignalen, wobei die erste Übertragungsleitung und die zweite Übertragungsleitung jeweils eine Mehrzahl verdrillter Leitungsadern aufweisen.

Hierdurch wird der technische Vorteil erreicht, dass über die ersten und zweiten Kontaktierungseinheiten Schnittstellen bereitgestellt werden, die das Aussenden und/oder Empfangen von Datensignalen ermöglichen. Über die Mehrzahl von verdrillten Leitungsadern der ersten und zweiten Übertragungsleitungen kann eine störungsfreie Datenübertragung erreicht werden.

Alternativ können auch jeweils zwei Sendekanäle über differentielle Leitungspaare zu einem Sendekanal und zwei Empfangskanäle über zwei differentielle Leitungspaare zu einem Empfangskanal zusammengefasst sein.

Nach einer Ausführungsform weist die Antriebswelle ein der ersten Anschlusseinrichtung der ersten Anschlussseite gegenüberliegend angeordnetes Wellenende auf, wobei die erste Drahtlostransceivereinheit dem Wellenende der Antriebswelle gegenüberliegend drehfest am Gehäuse angeordnet ist, wobei die zweite Drahtlostransceivereinheit der zweiten Anschlusseinrichtung gegenüberliegend drehfest am Gehäuse angeordnet ist, und wobei der drahtgeführte Übertragungsteilpfad zwischen der ersten Drahtlostransceivereinheit und der zweiten Drahtlostransceivereinheit definiert ist.

Hierdurch wird der technische Vorteil erreicht, dass ein Armmodul mit einer einfach zu realisierenden rotationskompatiblen Datenübertragung bereitgestellt werden kann. Hierzu sind die ersten und zweiten Drahtlostransceivereinheiten jeweils drehfest am Gehäuse angeordnet und über einen drahtgeführten Übertragungsteilpfad miteinander verbunden. Die erste Drahtlostransceivereinheit ist hierbei dem Wellenende der Antriebswelle gegenüberliegend angeordnet, während die zweite Drahtlostransceivereinheit der zweiten Anschlussseite gegenüberliegend angeordnet ist. Der Übertragungspfad der rotationskompatiblen Datenübertragungseinrichtung umfasst einen ersten drahtlosen Übertragungsteilpfad und einen zweiten drahtlosen Übertragungsteilpfad. Der erste drahtlose Übertragungsteilpfad ist zwischen der ersten Drahtlostransceivereinheit und der ersten Anschlusseinrichtung der ersten Anschlussseite definiert und der zweite drahtlose Übertragungsteilpfad ist zwischen der zweiten Drahtlostransceivereinheit und der zweiten Anschlusseinrichtung der zweiten Anschlussseite definiert. Durch die drehfeste Anordnung der ersten und zweiten Drahtlostransceivereinheiten am Gehäuse ist eine robuste und einfach zu konstruierende rotationskompatible Datenübertragungseinrichtung ermöglicht.

Nach einer Ausführungsform umfasst der Übertragungspfad wenigstens einen ersten drahtlosen Übertragungsteilpfad und wenigstens einen zweiten drahtlosen Übertragungsteilpfad, wobei der erste drahtlose Übertragungsteilpfad zwischen der ersten Drahtlostransceivereinheit und einer ersten drahtlosen Datenschnittstelleneinrichtung der ersten Anschlusseinrichtung definiert ist und durch die zentrale Längsdurchgangsausnehmung der Antriebswelle verläuft, wobei der zweite drahtlose Übertragungsteilpfad zwischen der zweiten Drahtlostransceivereinheit und einer zweiten drahtlosen Datenschnittstelleneinrichtung der zweiten Anschlusseinrichtung definiert ist, und wobei die erste drahtlose Datenschnittstelleneinrichtung auf der ersten Rotationsachse der ersten Anschlussseite und die zweite drahtlose Datenschnittstelleneinrichtung auf einer zweiten Rotationsachse der zweiten Anschlussseite angeordnet sind.

Hierdurch wird der technische Vorteil erreicht, dass eine einfach zu gestaltende rotationskompatible Datenübertragungseinrichtung bereitgestellt werden kann. Hierzu umfasst der Übertragungspfad der rotationskompatiblen Datenübertragungseinrichtung einen ersten drahtlosen Übertragungsteilpfad und einen zweiten drahtlosen Übertragungsteilpfad.

Der erste drahtlose Übertragungsteilpfad ist zwischen der ersten Drahtlostransceivereinheit und der ersten Anschlusseinrichtung der ersten Anschlussseite definiert. Der zweite drahtlose Übertragungsteilpfad ist zwischen der zweiten Drahtlostransceivereinheit und der zweiten Anschlusseinrichtung der zweiten Anschlussseite definiert.

Der erste drahtlose Übertragungsteilpfad ist ferner entlang der zentralen Längsdurchgangsausnehmung der Antriebswelle angeordnet und auf der ersten Rotationsachse der Antriebswelle positioniert. Eine Datenübertragung von beispielsweise der ersten Drahtlostransceivereinheit in Richtung der ersten Anschlusseinrichtung der ersten Anschlussseite verläuft somit durch die zentrale Längsausnehmung der Antriebswelle und bleibt daher von einer Rotation der Antriebswelle unbeeinflusst. Bei rotierbarer Kopplung zweier Armmodule, bei der eine Kopplung zwischen der ersten Anschlussseite eines Armmoduls und der zweiten Anschlussseite des jeweils anderen Armmoduls realisiert ist, ist somit eine rotationskompatible Datenübertragung zwischen der ersten Drahtlostransceivereinheit des einen Armmoduls und der zweiten Drahtlostransceivereinheit des jeweils anderen Armmoduls über den drahtlosen Übertragungsteilpfad zwischen den beiden Drahtlostransceivereinheiten, der durch die Längsausnehmung der Antriebswelle des einen Armmoduls verläuft, ermöglicht.

Nach einer Ausführungsform ist der drahtgeführte Übertragungspfad durch eine Übertragungsleitung gebildet, wobei die erste Drahtlostransceivereinheit und die zweite Drahtlostransceivereinheit über die Übertragungsleitung miteinander verbunden sind.

Hierdurch wird der technische Vorteil erreicht, dass eine verlässliche Datenübertragung zwischen der ersten Drahtlostransceivereinheit und der zweiten Drahtlostransceivereinheit innerhalb eines Armmoduls bereitgestellt werden kann.

Nach einer Ausführungsform sind die erste Drahtlostransceivereinheit und die zweite Drahtlostransceivereinheit als eine erste optische Transceivereinheit und eine zweite optische Transceivereinheit ausgebildet, die eingerichtet sind, Lichtsignale als Datensignale auszusenden und/oder zu empfangen.

Hierdurch wird der technische Vorteil erreicht, dass ein Armmodul mit einer robusten rotationskompatiblen Datenübertragungseinrichtung bereitgestellt werden kann, die eine verlässliche und wenig fehleranfällige drahtlose Übertragung von Datensignalen ermöglicht. Über die Ausbildung der ersten und zweiten Drahtlostransceivereinheiten als erste und zweite optische Transceivereinheiten, die eingerichtet sind, Lichtsignale als Datensignale auszusenden und/oder zu empfangen, kann eine verlässliche und wenig fehlersensitive Drahtlosübertragung von Datensignalen erreicht werden, die eine Übertragung hoher Bitraten und hoher Übertragungsraten über geringe Wegstrecken ermöglicht.

Darüber hinaus kann über die Übertragung von Lichtsignalen erreicht werden, dass durch die drahtlose Übertragung der Datensignale weitere Steuereinheiten des Armmoduls bzw. des Roboterarms des Industrieroboters unbeeinflusst bleiben. Somit kann eine drahtlose Datenübertragung bereitgestellt werden, die hohe Bitraten und hohe Übertragungsraten ermöglicht, wenig fehleranfällig ist und geringe Einflüsse auf weitere Elektroniken bzw. Sensoren des Armmoduls ausübt.

Nach einer Ausführungsform ist der drahtlose Übertragungsteilpfad durch einen Lichtleiter gebildet.

Hierdurch wird der technische Vorteil erreicht, dass eine hohe Übertragungssicherheit und eine geringe Fehleranfälligkeit der Drahtlosübertragung von Datensignalen durch die rotationskompatible Übertragungseinrichtung erreicht werden kann. Durch die Bildung der drahtlosen Übertragungsteilpfade durch entsprechende Lichtleiter, die zwischen den ersten und zweiten optischen Transceivereinheiten angeordnet sind, kann erreicht werden, dass geringe Bitfehler aufgrund fehlerhafter Lichtsignale erzielt werden können. Über die Lichtleiter können hohe Übertragungsraten und geringe Fehlerraten der Lichtsignale erreicht werden.

Nach einer Ausführungsform sind die erste Drahtlostransceivereinheit und die zweite Drahtlostransceivereinheit als eine erste Antenneneinheit und eine zweite Antenneneinheit ausgebildet, die eingerichtet sind, Funksignale als Datensignale auszusenden und/oder zu empfangen.

Hierdurch wird der technische Vorteil erreicht, dass ein Armmodul mit einer einfach zu realisierenden rotationskompatiblen Datenübertragungseinrichtung bereitgestellt werden kann. Indem die ersten und zweiten Drahtlostransceivereinheiten durch erste und zweite Antenneneinheiten ausgebildet werden, die eingerichtet sind, Funksignale als Datensignale auszusenden und/oder zu empfangen, ist eine technisch einfach zu realisierende rotationskompatible Datenübertragungseinrichtung bereitgestellt. Über das Senden und Empfangen von Funksignalen zwischen den ersten und zweiten Antenneneinheiten kann eine rotationskompatible Übertragung von Datensignalen erreicht werden.

Nach einem zweiten Aspekt der Erfindung wird ein Industrieroboter mit einem modularen Roboterarm bereitgestellt, der eine Mehrzahl von erfindungsgemäßen Armmodulen aufweist.

Hierdurch wird der technische Vorteil erreicht, dass ein Industrieroboter mit Armmodulen bereitgestellt werden kann, die eine rotationskompatible Datenübertragung innerhalb der Armmodule und zwischen rotierbar gekoppelten Armmodulen ermöglichen.

Die Erfindung ist im Folgenden anhand von Ausführungsbeispielen unter Bezugnahme auf die beigefügten, schematischen und nicht maßstabsgetreuen Zeichnungen näher erläutert. Abschnitte, Elemente, Bauteile, Einheiten, Komponenten und/oder Schemata, welche eine identische oder analoge Ausbildung und/oder Funktion besitzen, sind in der Figurenbeschreibung, der Bezugszeichenliste, den Patentansprüchen und in den Figuren der Zeichnung mit denselben Bezugszeichen gekennzeichnet.

Bei der Erfindung kann ein Merkmal positiv, d. h. vorhanden, oder negativ, d. h. abwesend, ausgestaltet sein, wobei ein negatives Merkmal als Merkmal nicht explizit erläutert ist, wenn nicht nach der Erfindung Wert daraufgelegt ist, dass es abwesend ist, also die tatsächlich gemachte und nicht eine durch den Stand der Technik konstruierte Erfindung darin besteht, dieses Merkmal wegzulassen.

Die Merkmale der Beschreibung sind auch als optionale Merkmale interpretierbar; d. h. ein jedes Merkmal kann als ein fakultatives, arbiträres oder bevorzugtes, also als ein nicht verbindliches, Merkmal aufgefasst werden. So ist eine Herauslösung eines Merkmals, ggf. inkl. seiner Peripherie, aus einem Ausführungsbeispiel möglich, wobei dieses Merkmal dann auf einen verallgemeinerten Erfindungsgedanken übertragbar ist. Das Fehlen eines Merkmals in einem Ausführungsbeispiel zeigt, dass das Merkmal in Bezug auf die Erfindung optional ist.

In den Figuren zeigen:
- Fig. 1: eine perspektivische Ansicht eines Industrieroboters mit einem modularen, sechsachsigen Roboterarm gemäß einer Ausführungsform;
- Fig. 2: eine perspektivische Ansicht eines aktiven Armmoduls für einen Roboterarm aus Fig. 1, gemäß einer Ausführungsform;
- Fig. 3: eine Seitenschnittansicht des Armmoduls in Fig. 2, gemäß einer Ausführungsform;
- Fig. 4: einen Ausschnitt der Seitenschnittansicht des Armmoduls in Fig. 3;
- Fig. 5: eine Seitenschnittansicht des Armmoduls in Fig. 2, gemäß einer weiteren Ausführungsform;
- Fig. 6: eine Seitenschnittansicht einer ersten Anschlussseite des Armmoduls in Fig. 3 und Fig. 5;
- Fig. 7: eine Frontalansicht der ersten Anschlussseite des Armmoduls in Fig. 3 und Fig. 5;
- Fig. 8: eine perspektivische Ansicht einer Kontaktierungseinheit gemäß einer Ausführungsform;
- Fig. 9: eine Seitenschnittansicht des Armmoduls in Fig. 2, gemäß einer weiteren Ausführungsform;
- Fig. 10: eine Seitenschnittansicht einer zweiten Anschlussseite des Armmoduls in Fig. 9; und
- Fig. 11: eine Seitenschnittansicht einer ersten Anschlussseite des Armmoduls in Fig. 9.

Die Erfindung ist im Folgenden anhand von Ausführungsbeispielen von Varianten eines multifunktionalen Rotationsübertragungssystems für Ausführungsformen eines modularen Roboterarms für einen Industrieroboter näher erläutert. Obwohl die Erfindung detaillierter und durch die Ausführungsbeispiele näher beschrieben und illustriert ist, so ist die Erfindung nicht durch die offenbarten Ausführungsbeispiele eingeschränkt, sondern ist von grundlegenderer Natur.

In den Figuren sind nur diejenigen räumlichen Abschnitte eines Gegenstands der Erfindung dargestellt, welche für ein Verständnis der Erfindung notwendig sind. Ferner bezieht sich die Erläuterung der Erfindung im Folgenden auf ein polares Koordinatensystem mit einer Axialrichtung Ar, einer Radialrichtung Rr und einer Umfangsrichtung Ur. Eine Rotationsachse Ra eines bestimmten Armmoduls ist dabei koaxial oder parallel zu einer dieses Armmodul betreffenden Axialrichtung Ar.

Für zwei rechtwinklig zueinander orientierte Anschlussseiten eines Armmoduls ergeben sich damit eine erste Axialrichtung Ar₁₁, erste Radialrichtungen Rr₁₁ und eine erste Umlaufrichtung Ur₁₁ sowie eine zweite Axialrichtung Ar₁₂, zweite Radialrichtungen Rr₁₂ und eine zweite Umlaufrichtung Ur₁₂.

Es soll eine rotationskompatible Übertragung von Datensignalen erfolgen, wobei eine rotationskompatible Übertagung von Datensignalen eine Übertragung von Datensignalen zwischen zwei gegeneinander rotierender Anschlussseiten eines Armmoduls betrifft. Hierdurch wird ferner eine rotationskompatible Übertragung von Datensignalen zwischen rotierbar gekoppelten Armmodulen des Industrieroboters erreicht.

Ferner kann im Industriebroboter eine entsprechende rotationskompatible Übertragung von elektrischem Strom bzw. elektrischer Spannung und/oder Fluid zwischen zwei gegeneinander rotierbarer Armmodule mit Hilfe eines multifunktionalen rotationskompatiblen Übertragungssystems erfolgen. Hierbei können die Armmodule des modularen Industrieroboters über steckbare bzw. schraubbare Kontaktierungen miteinander verbindbar sein.

Entsprechende Verbindungseinrichtungen zum Übertragen von Datensignalen, elektrischem Strom bzw. elektrischer Spannung und/oder Fluid können dabei ebenfalls steckbar sein.

Für die Übertragung von Datensignalen werden drahtlose sowie drahtgebundene Signalübertragungspfade eingesetzt. Hierfür ist eine rotationskompatible Datenübertragungseinrichtung des multifunktionalen rotationskompatiblen Übertragungssystems notwendig, um die Vorgabe einer Rotierbarkeit der Armmodule zueinander realisieren zu können, wobei die rotationskompatible Datenübertragungseinrichtung armmodulintern oder zwischen zwei Armmodulen ausgeführt sein kann.

Um ferner die Vorgabe einer Rotierbarkeit der Armmodule gegeneinander realisieren zu können, kann eine rotationskompatible Übertragung von elektrischem Strom bzw. elektrischer Spannung armmodulintern mittels einer elektrischen rotationskompatiblen Übertragungseinrichtung des multifunktionalen Rotationsübertragungssystems vorzugsweise in Form einer elektrischen Schleifringeinrichtung erfolgen.

Um des Weiteren eine rotationskompatible Übertragung von Fluid realisieren zu können, kann eine rotationskompatible Übertragung von Fluid armmodulintern mittels einer fluidischen rotationskompatiblen Übertragungseinrichtung des multifunktionalen rotationskompatiblen Übertragungssystems vorzugsweise in Form einer fluidischen Rotationsdurchführung erfolgen.

Die rotationskompatible Übertragung von Strom bzw. Spannung und/oder Fluid wird im Folgenden nicht weiter detailliert beschrieben.

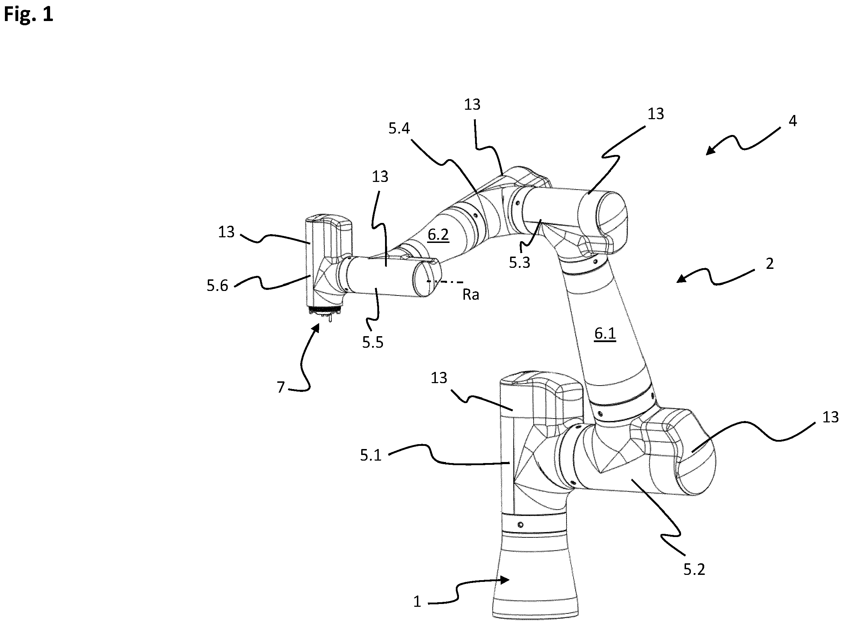

In der Fig. 1 ist beispielhaft eine Ausführungsform einer Variante eines Roboterarms 2 eines modularen Industrieroboters dargestellt, welcher auch als Handhabungsroboter oder Arbeitsmaschine bezeichenbar ist. Ein Industrieroboter ist eine automatische Maschine mit mehreren Freiheitsgraden, welcher durch eine vorprogrammierte Steuerung/Regelung verschiedene Funktionen in einer Arbeitsumgebung in (bedingter) Eigenleistung durchführen kann. Der modulare Industrieroboter umfasst eine Roboterbasis 1, den Roboterarm 2 und einen bevorzugt auswechselbaren (End-)Effektor (nicht gezeigt), auch als Roboterhand bezeichenbar, mit beispielsweise einem Werkzeug, einem Greifer etc., welcher an einem distalen Ende 7 des Roboterarms 2 anordenbar ist.

Der Roboterarm 2 besitzt zwei bis sechs Bewegungsachsen. In der Ausführungsform in der Fig. 1 sind sechs rotatorische Freiheitsgrade vorgesehen. Es lassen sich dabei eine beliebige Anzahl von vollständigen und teilweisen Umdrehungen eines betreffenden Armmoduls 4 des Roboterarms 2 in beide Umfangsrichtungen einer betreffenden Rotationsachse durchführen. Es ist möglich, eine jeweilige Rotationsachse auch als eine Schwenkachse oder Drehachse auszubilden, d. h. eine Bewegung des betreffenden Armmoduls 4 auf einen bestimmten Winkel zu beschränken, wie beispielsweise auf Winkel kleiner als 720°, 540°, 360°, 270°, 180°, 90° oder 45°.

Einem Armmodul 4 bzw. einer jeweiligen Rotationsachse Ra des Armmoduls 4 können Sensoren (in Fig. 1 nicht gezeigt) zugeordnet sein, deren Daten für eine Steuerung des entsprechenden Armmoduls 4 bzw. des Roboterarms 2 verwendet werden können. Es können z. B. ein Kraft- und/oder Drehmomentsensor sowie ein Positionssensor vorgesehen sein, mit welchen eine Kraft und/oder ein Drehmoment auf das Armmodul 4 sowie eine Position des Armmoduls 4 erfassbar sind. Dies ist ggf. auch auf einen Abschnitt oder einen Längsendabschnitt des Roboterarms 2 beschränkbar.

Der vorliegende Roboterarm 2 des Industrieroboters ist modular mit einer Mehrzahl von Armmodulen 4 aufgebaut. Prinzipiell sind die Armmodule 4 beliebig auslegbar, wobei, wie in der Fig. 1 gezeigt, zwischen aktiven Armmodulen 5 und passiven Armmodulen 6 unterschieden werden kann. Ein aktives Armmodul 5 besitzt eine Antriebseinrichtung 13, mittels welcher ein daran anschließbares weiteres Armmodul 4 geschwenkt, gedreht und/oder rotiert werden kann. Analog dazu weist ein passives Armmodul 6 keine Antriebseinrichtung auf. Alle Merkmale des Armmoduls 4, die im Wesentlichen für ein aktives Armmodul 5 beschrieben werden, können analog oder in angepasster Form auch in einem passiven Armmodul 6 ausgebildet sein. Alternativ kann ein passives Armmodul 6 auch keine oder nur einige der beschriebenen Rotationsübertragungseinrichtungen für Daten, Energie und/oder Fluid aufweisen.

Vorliegend weist ein bestimmter Modulbaukasten für einen Roboterarm 2 wenigstens einen Typ eines aktiven Armmoduls 5 in J-Form und ggf. wenigstens einen Typ eines passiven Armmoduls 6 in I-Form, jeweils mit stirn- und/oder längs-/rumpfseitigen und jeweils zueinander mechanisch komplementären oder mechanisch analogen Anschlüssen auf. Statt einer J-Form für das aktive Armmodul 5 bzw. einer I-Form für das passive Armmodul 6 sind ggf. andere geometrische Formen anwendbar. Alternativ können auch das aktive Armmodul 5 eine I-Form und das passive Armmodul 6 eine J-Form aufweisen.

Abgesehen von der Roboterbasis 1 und/oder einem Effektor am distalen Ende 7, sind bevorzugt sämtliche Armmodule 4 solch eines Modulbaukastens für Roboterarme 2 derart ausgebildet, dass immer zwei Anschlüsse zweier Armmodule 4 miteinander korrespondieren und miteinander verbunden werden können. D. h. eine erste Anschlussseite eines beliebigen Armmoduls 4 des Modulbaukastens ist an einer zweiten Anschlussseite eines beliebigen weiteren Armmoduls 4 dieses Modulbaukastens anschließbar, bzw. vice versa. Bevorzugt besitzen die erste Anschlussseite und die zweite Anschlussseite des Armmoduls 4 jeweils eine einheitliche, komplementäre Kontaktierungsmimik, die eine Kompatibilität der Armmodule 4 über betreffende, insbesondere alle, Baureihen des Modulbaukastens hinweg sicherstellt.

In der Fig. 1 sind die aktiven Armmodule 5 und die passiven Armmodule 6 zur Unterscheidung jeweils mit einer Zusatznummer getrennt durch einen Punkt versehen, wobei ausgehend von der Roboterbasis 1 in Richtung des distalen Endes 7 nummeriert ist. Bei dem Roboterarm 2 in der Ausführung nach der Fig. 1 ist ein erstes aktives Armmodul 5.1 mit der Roboterbasis 1 an der ersten Anschlussseite verbunden. An die zweite Anschlussseite des ersten aktiven Armmoduls 5.1 ist die erste Anschlussseite eines zweiten aktiven Armmoduls 5.2 angeschlossen. Zwischen dem zweiten aktiven Armmodul 5.2 und einem dritten aktiven Armmodul 5.3 ist ein erstes passives Armmodul 6.1 angeordnet, welches die zweite Anschlussseite des zweiten aktiven Armmoduls 5.2 mit der zweiten Anschlussseite des dritten aktiven Armmoduls 5.3 verbindet. An der ersten Anschlussseite des dritten aktiven Armmoduls 5.3 ist die zweite Anschlussseite eines vierten aktiven Armmoduls 5.4 angeschlossen. Die erste Anschlussseite des vierten aktiven Armmoduls 5.4 ist über ein zweites passives Armmoduls 6.2 mit der zweiten Anschlussseite eines fünften aktiven Armmoduls 5.5 verbunden. An die erste Anschlussseite des fünften aktiven Armmoduls 5.5 ist die zweite Anschlussseite eines sechsten aktiven Armmoduls 5.6 angeschlossen, dessen erste Anschlussseite dann das distale Ende 7 des Roboterarms 2 bildet.

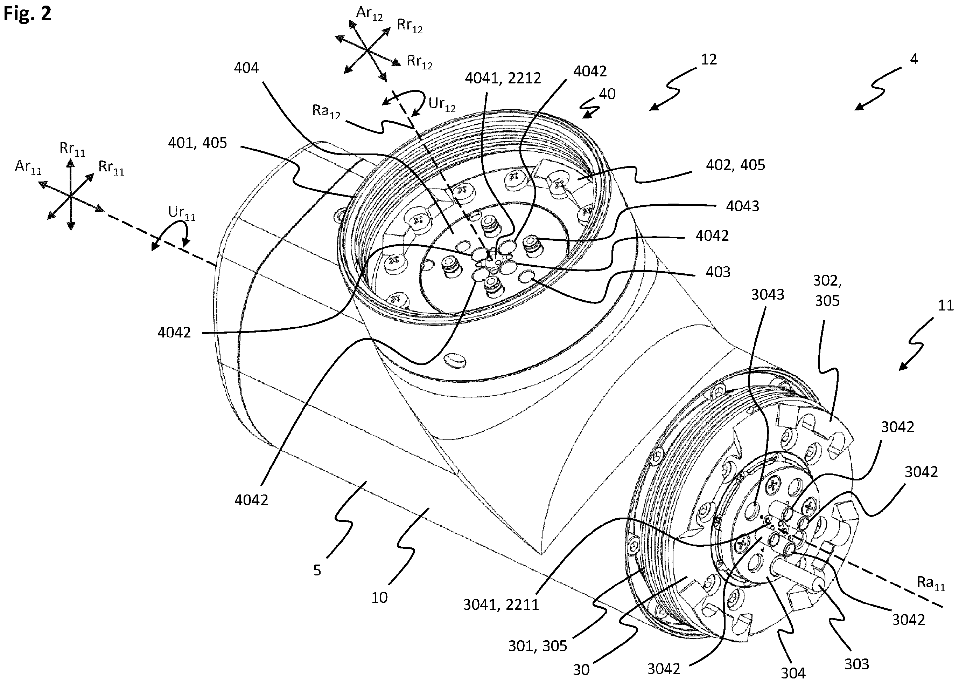

In der Fig. 2 ist in einer Perspektivansicht beispielhaft ein aktives Armmodul 5 für den Roboterarm 2 aus der Fig. 1 gezeigt. Dabei verbindet ein Gehäuse 10 in J-Form die erste Anschlussseite 11 mit der zweiten Anschlussseite 12 mechanisch. Für die erste Anschlussseite 11 und die zweite Anschlussseite 12 ist jeweils ein polares Koordinatensystem mit einer Axialrichtung Ar, einer Radialrichtung Rr und einer Umfangsrichtung Ur angezeigt, die jeweils mit einem entsprechenden Index für die zugeordnete Anschlussseite versehen sind. Weiterhin ist für jede Anschlussseite eine zugeordnete Rotationsachse Ra mit dem entsprechenden Index dargestellt.

Die erste Anschlussseite 11 des aktiven Armmoduls 5 ist mechanisch, datentechnisch, elektrisch und/oder fluidisch mit der zweiten Anschlussseite eines weiteren Armmoduls 4 (nicht gezeigt) koppelbar. Ferner ist die zweite Anschlussseite 12 des aktiven Armmoduls 5 mechanisch, datentechnisch, elektrisch und/oder fluidisch mit der ersten Anschlussseite eines weiteren Armmoduls 4 (nicht gezeigt) koppelbar. Hierbei ist die erste Anschlussseite 11 des aktiven Armmoduls 5 bevorzugt rotierbar am aktiven Armmodul 5 vorgesehen, wobei die zweite Anschlussseite 12 dann fest am aktiven Armmodul 5 eingerichtet ist. Die Festlegung von rotierbarer und nicht-rotierbarer Anschlussseite kann aber auch genau umgekehrt sein. Bei einem passiven Armmodul 6 in der Fig. 1 sind sowohl die erste Anschlussseite als auch die zweite Anschlussseite starr an einem I-förmigen Gehäuse ausgeführt. Die erste Anschlussseite 11 und die zweite Anschlussseite 12 der aktiven Armmodule 5 und/oder der passiven Armmodule 6 sind korrespondierend zueinander ausgebildet.

Bei dem in der Fig. 2 gezeigten Armmodul 4 weist die erste Anschlussseite 11 eine erste rotierbare Anschlusseinrichtung 30 und die zweite Anschlussseite 12 eine gehäusefeste zweite Anschlusseinrichtung 40 auf.

Die rotierbare erste Anschlusseinrichtung 30, die sich senkrecht zur ersten Rotationsachse Ra₁₁ der ersten Anschlussseite 11 erstreckt, ist kreisförmig ausgebildet und drehbar am Gehäuse 10 angeordnet. An einer äußeren Umfangsseite der ersten Anschlusseinrichtung 30 ist ein Außengewinde 301 angebracht. Die erste Anschlusseinrichtung 30 weist eine vier Zähne aufweisende erste Stirnverzahnung 302 auf, die als Hirth-Verzahnung ausgebildet ist. Das Außengewinde 301 und die erste Stirnverzahnung 302 bilden erste mechanische Verbindungselemente 305 der rotierbaren ersten Anschlusseinrichtung 30.

Die erste Anschlusseinrichtung 30 umfasst zudem eine erste Kontakteinrichtung 304, die eine erste Datenschnittstelleneinrichtung 3041, eine erste elektrische Schnittstelleneinrichtung 3042 und eine erste fluidische Schnittstelleneinrichtung 3043 beinhaltet.

Die gehäusefeste zweite Anschlusseinrichtung 40, die auch kreisförmig ausgebildet ist, ist senkrecht zur zweiten Rotationsachse Ra₁₂ der zweiten Anschlussseite 12 ausgerichtet und drehfest mit dem Gehäuse 10 verbunden. Umfangsseitig weist die zweite Anschlussseite 12 einen Befestigungsring 401 mit einem Innengewinde auf, wobei das Innengewinde korrespondierend zu dem Außengewinde 301 der ersten Anschlusseinrichtung 30 ausgebildet ist. Die zweite Anschlusseinrichtung 40 umfasst weiter eine vier Zähne aufweisende zweite Stirnverzahnung 402, die als Hirth-Verzahnung ausgebildet ist und komplementär zu den Zähnen der ersten Stirnverzahnung 302 der ersten Anschlusseinrichtung 30 ausgebildet ist. In der zweiten Anschlusseinrichtung 40 ist zudem eine Zentrieraufnahme 403 vorgesehen, die mit einem Zentrierstift 303 der ersten Anschlusseinrichtung 30 korrespondiert. Der Befestigungsring 401 mit dem Innengewinde und die zweite Stirnverzahnung 402 bilden zweite mechanische Verbindungselemente 405 der gehäusefesten zweiten Anschlusseinrichtung 40.

Die zweite Anschlusseinrichtung 40 weist ferner eine zweite Kontakteinrichtung 404 auf, die eine zweite Datenschnittstelleneinrichtung 4041, eine zweite elektrische Schnittstelleneinrichtung 4042 und eine zweite fluidische Schnittstelleneinrichtung 4043 beinhaltet, die komplementär zu der ersten Datenschnittstelleneinrichtung 3041, der ersten elektrischen Schnittstelleneinrichtung 3042 und der ersten fluidischen Schnittstelleneinrichtung 3043 der ersten Kontakteinrichtung 304 der ersten Anschlusseinrichtung 30 ausgebildet sind.

Bei Zusammenbau des Roboterarms 2, wie er in der Fig. 1 gezeigt ist, wird die erste Anschlusseinrichtung 30 eines aktiven Armmoduls 5 auf die zweite Anschlusseinrichtung 40 eines weiteren aktiven Armmoduls 5 aufgesetzt. Dabei greift der Zentrierstift 303 in die Zentrieraufnahme 403 ein. Der Zentrierstift 303 und die Zentrieraufnahme 403 dienen so als Kodiereinrichtung. Es könnte aber auch eine anders ausgestaltete Kodierung vorgesehen sein. Eine Kodierung könnte beispielsweise über eine komplementäre Geometrie der Anschlusseinrichtungen erfolgen.

Durch Verdrehung des Befestigungsrings 401 wird das Innengewinde auf das Außengewinde 301 aufgeschraubt, wodurch die zweite Anschlusseinrichtung 40 auf die erste Anschlusseinrichtung 30 gepresst wird. Im angepressten Zustand greifen die erste Stirnverzahnung 302 und die zweite Stirnverzahnung 402 derart ineinander ein, dass die erste Anschlusseinrichtung 30 und die zweite Anschlusseinrichtung 40 mechanisch drehmomentschlüssig miteinander verbunden sind. Ferner kontaktiert die erste Kontakteinrichtung 304 die zweite Kontakteinrichtung 404, so dass eine datentechnische, elektrische und fluidische Kopplung zur Übertragung von Datensignalen, elektrischem Strom bzw. elektrischer Spannung und Fluid bereitgestellt ist.

Die erste Kontakteinrichtung 304 der ersten Anschlusseinrichtung 30 mit den jeweiligen Schnittstelleneinrichtungen und die zweite Kontakteinrichtung 404 der zweiten Anschlusseinrichtung 40 mit den jeweiligen Schnittstelleneinrichtungen sind radial innerhalb der mechanischen Verbindung angeordnet, die durch das Außengewinde 301 und die erste Stirnverzahnung 302 der ersten Anschlusseinrichtung 30 und den Befestigungsring 401 mit dem Innengewinde und die zweite Stirnverzahnung 402 der zweiten Anschlusseinrichtung 40 gebildet ist.

Die Datenkopplung der aktiven Armmodule 5 erfolgt durch Übertragung zwischen der ersten Datenschnittstelleneinrichtung 3041 der ersten Kontakteinrichtung 304 und der zweiten Datenschnittstelleneinrichtung 4041 der zweiten Kontakteinrichtung 404, die ineinandergesteckt werden können.

In der Ausführungsform in Fig. 2 sind die erste Datenschnittstelleneinrichtung 3041 und die zweite Datenschnittstelleneinrichtung 4041 als eine erste Kontaktierungseinheit 2211 und eine zweite Kontaktierungseinheit 2212 ausgebildet, die mit entsprechenden Kontaktierungseinheiten weiterer Armmodule 4 koppelbar sind und eine drahtgeführte Datenübertragung zwischen den Armmodulen 4 ermöglichen. Die erste Kontaktierungseinheit 2211 ist hierbei auf der ersten Rotationsachse Ra₁₁ und die zweite Kontaktierungseinheit 2212 ist auf der zweiten Rotationsachse Ra₁₂ ausgebildet, sodass eine Datenübertragung zwischen gekoppelten Armmodulen 4 entlang der ersten Rotationachse Ra₁₁ und entlang der zweiten Rotationsachse Ra₁₂ erfolgt.

Die elektrische Kopplung der aktiven Armmodule 5 erfolgt durch Übertragung zwischen der ersten elektrischen Schnittstelleneinrichtung 3042 der ersten Kontakteinrichtung 304 und der zweiten elektrischen Schnittstelleneinrichtung 4042 der zweiten Kontakteinrichtung 404. Bevorzugt sind die elektrischen Schnittstelleneinrichtungen dabei als einfach aufgebaute elektromechanische Berührverbindungseinrichtungen oder Steckverbindungseinrichtungen ausgebildet.

Die fluidische Kopplung der aktiven Armmodule 5 erfolgt durch Übertragung zwischen der ersten fluidischen Schnittstelleneinrichtung 3043 der ersten Kontakteinrichtung 304 und der zweiten fluidischen Schnittstelleneinrichtung 4043 der zweiten Kontakteinrichtung 404. Bevorzugt sind die fluidischen Schnittstelleneinrichtungen dabei als einfach aufgebaute fluidmechanische Berührverbindungseinrichtungen oder Steckverbindungseinrichtungen ausgebildet.

Die Montage wurde beispielhaft für zwei aktive Armmodule 5 des Roboterarms 2 in der Fig. 1 erläutert. Der Anbau von passiven Armmodulen 6 erfolgt auf die gleiche Weise.

Durch die Verbindung der ersten Anschlusseinrichtung 30 mit der zweiten Anschlusseinrichtung 40 sind benachbarte Armmodule 4 mechanisch befestigt. Weiterhin ist eine datentechnische, elektrische und fluidische Kopplung zur Übertragung von Datensignalen, elektrischem Strom bzw. elektrischer Spannung und Fluid bereitgestellt.

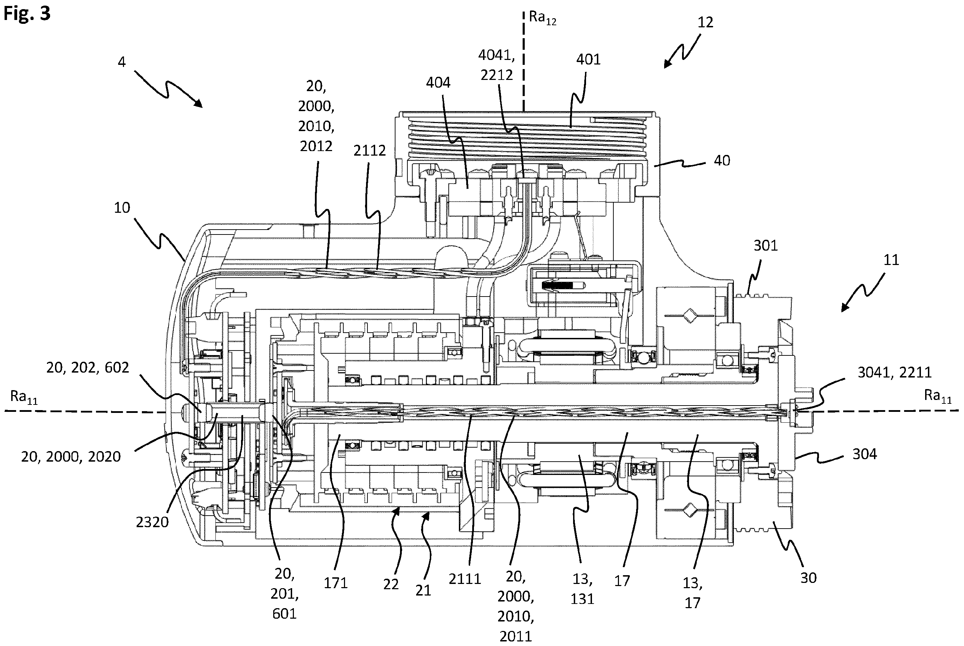

Fig. 3 zeigt eine Seitenschnittansicht des Armmoduls 4 in Fig. 2, gemäß einer Ausführungsform.

Das Armmodul 4 umfasst eine Antriebseinrichtung 13 mit einer Antriebswelle 17 und einer Motoreinheit 131. Die Antriebswelle 17 ist drehfest mit der ersten Kontakteinrichtung 304 der ersten Anschlusseinrichtung 30 der ersten Anschlussseite 11 verbunden. Die Antriebswelle 17 ist parallel zu einer ersten Rotationsachse Ra₁₁ angeordnet. Über die Motoreinheit 131 kann die Antriebswelle 17 um die erste Rotationsachse Ra₁₁ rotiert werden. Hierdurch kann eine Rotation der ersten Kontakteinrichtung 304 der ersten Anschlusseinrichtung 30 relativ zum Gehäuse 10 des Armmoduls 4 erreicht werden. Über eine Kopplung zweier Armmodule 4 über die erste Anschlusseinrichtung 30 und die zweite Anschlusseinrichtung 40, wie oben beschrieben, kann mittels einer Rotation der Antriebswelle 17 eine Rotation der zwei gekoppelten Armmodule 4 gegeneinander erreicht werden.

Ferner umfasst das Armmodul 4 eine rotationskompatible Datenübertragungseinrichtung 20. Die rotationskompatible Datenübertragungseinrichtung 20 weist eine erste Drahtlostransceivereinheit 201 und eine zweite Drahtlostransceivereinheit 202 auf. Die rotationskompatible Datenübertragungseinrichtung 20 weist ferner einen Übertragungspfad 2000, der zwischen der ersten Anschlusseinrichtung 30 und der zweiten Anschlusseinrichtung 40 verläuft, auf. In der Ausführungsform in Fig. 3 umfasst der Übertragungspfad 2000 einen ersten drahtgeführten Übertragungsteilpfad 2011 und einen zweiten drahtgeführten Übertragungsteilpfad 2012. Ferner umfasst der Übertragungspfad 2000 einen drahtlosen Übertragungsteilpfad 2020.

In der Ausführungsform in Fig. 3 ist die erste Drahtlostransceivereinheit 201 an einem Wellenende 171 der Antriebswelle 17 angeordnet. Die zweite Drahtlostransceivereinheit 202 ist der ersten Drahtlostransceivereinheit 201 gegenüberliegend drehfest am Gehäuse 10 angeordnet. Die erste Drahtlostransceivereinheit 201 sowie die zweite Drahtlostransceivereinheit 202 sind auf der ersten Rotationsachse Ra₁₁ der Antriebswelle 17 angeordnet. Über eine Rotation der Antriebswelle 17 um die erste Rotationsachse Ra₁₁ ist die erste Drahtlostransceivereinheit 201 relativ zur zweiten Drahtlostransceivereinheit 202 rotierbar.

Die erste Drahtlostransceivereinheit 201 und die zweite Drahtlostransceivereinheit 202 sind einander zugewandt und definieren den drahtlosen Übertragungsteilpfad 2020 zwischen der ersten Drahtlostransceivereinheit 201 und der zweiten Drahtlostransceivereinheit 202, sodass der drahtlose Übertragungsteilpfad 2020 auf der ersten Rotationsachse Ra₁₁ angeordnet ist.

Die erste Drahtlostransceivereinheit 201 und die zweite Drahtlostransceivereinheit 202 sind eingerichtet, Datensignale drahtlos auszusenden und/oder zu empfangen.

Über den drahtlosen Übertragungsteilpfad 2020 können somit zwischen der ersten Drahtlostransceivereinheit 201 und der zweiten Drahtlostransceivereinheit 202 drahtlos Datensignale ausgetauscht werden. Dieser Datenaustausch kann auch dann durchgeführt werden, wenn aufgrund einer Rotation der Antriebswelle 17 die erste Drahtlostransceivereinheit 201 relativ zur zweiten Drahtlostransceivereinheit 202 eine Rotation um die erste Rotationsachse Ra₁₁ durchführt. Da sowohl die erste Drahtlostransceivereinheit 201 als auch die zweite Drahtlostransceivereinheit 202 auf der ersten Rotationsachse Ra₁₁ angeordnet sind, bleibt eine Ausrichtung der ersten Drahtlostransceivereinheit 201 zur zweiten Drahtlostransceivereinheit 202 bei einer Rotation um die erste Rotationsachse Ra₁₁ bestehen. Der drahtlose Übertragungsteilpfad 2020 bleibt bei einer Rotation der ersten Drahtlostransceivereinheit 201 relativ zur zweiten Drahtlostransceivereinheit 202 ebenfalls auf der ersten Rotationsachse Ra₁₁ positioniert.

Die erste Drahtlostransceivereinheit 201 ist über den ersten drahtgeführten Übertragungsteilpfad 2011 mit der ersten Datenschnittstelleneinrichtung 3041 der ersten Kontakteinrichtung 304 der ersten Anschlusseinrichtung 30 verbunden. In der Ausführungsform in Fig. 3 ist die erste Datenschnittstelleneinrichtung 3041 als eine erste Kontaktierungseinheit 2211 ausgebildet. Der erste drahtgeführte Übertragungsteilpfad 2011 ist als eine erste Übertragungsleitung 2111 ausgebildet. Die erste Übertragungsleitung 2111 ist entlang der ersten Rotationsachse Ra₁₁ innerhalb der Antriebswelle 17, insbesondere in einer Längsdurchgangsausnehmung 173 der Antriebswelle 17 angeordnet.

Die zweite Drahtlostransceivereinheit 202 ist über den zweiten drahtgeführten Übertragungsteilpfad 2012 mit der zweiten Datenschnittstelleneinrichtung 4041 der zweiten Kontakteinrichtung 404 der zweiten Anschlusseinrichtung 40 verbunden. In der Ausführungsform der Fig. 3 ist die zweite Datenschnittstelleneinrichtung 4041 als eine zweite Kontaktierungseinheit 2212 ausgebildet. Der zweite drahtgeführte Übertragungsteilpfad 2012 ist als eine zweite Übertragungsleitung 2112 ausgebildet.

Mittels der ersten Kontaktierungseinheit 2211 und der zweiten Kontaktierungseinheit 2212 ist bei Kopplung mehrerer Armmodule 4 eine Datenübertragung zwischen den gekoppelten Armmodulen 4 ermöglicht. Eine Rotation der Antriebswelle 17 zum relativen Rotieren zweier gekoppelter Armmodule 4 führt zu einer simultanen Rotation der ersten Drahtlostransceivereinheit 201, der ersten Übertragungsleitung 2111 und der ersten Kontaktierungseinheit 2211. Eine Verdrillung der ersten Übertragungsleitung 2111 findet somit nicht statt.

Die zweite Kontaktierungseinheit 2212 ist über die zweite Kontakteinrichtung 404 der zweiten Anschlusseinrichtung 40 drehfest am Gehäuse 10 angeordnet. Eine Verdrillung der zweiten Übertragungsleitung 2112 bei Rotation der Armmodule 4 ist somit ebenfalls vermieden. Hierdurch kann eine rotationskompatible Datenübertragung zwischen der ersten Anschlussseite 11 und der zweiten Anschlussseite 12 des Armmoduls 4 für eine beliebige Rotation der Antriebswelle 17 erreicht werden.

Das Armmodul 4 umfasst ferner eine elektrische rotationskompatible Übertragungseinrichtung 21 und eine fluidische rotationskompatible Übertragungseinrichtung 22, die jeweils eine rotationskompatible Übertragung von elektrischer Energie und Arbeitsfluid zwischen der ersten Anschlussseite 11 und der zweiten Anschlussseite 12 ermöglichen.

In der Ausführungsform in Fig. 3 ist die erste Drahtlostransceivereinheit 201 als eine erste optische Transceivereinheit 601 ausgebildet. Analog ist die zweite Drahtlostransceivereinheit 202 als eine zweite optische Transceivereinheit 602 ausgebildet. Die erste optische Transceivereinheit 601 und die zweite optische Transceivereinheit 602 sind eingerichtet, Lichtsignale als Datensignale drahtlos auszusenden und/oder zu empfangen. Eine drahtlose Datenübertragung zwischen der ersten optischen Transceivereinheit 601 und der zweiten optischen Transceivereinheit 602 findet somit entlang des drahtlosen Übertragungsteilpfads 2020 über das Aussenden und/oder Empfangen von Lichtsignalen statt. Hierzu sind die erste optische Transceivereinheit 601 und die zweite optische Transceivereinheit 602 eingerichtet, elektrische Datensignale in entsprechende Lichtsignale umzuwandeln und diese auszusenden bzw. empfangene Lichtsignale in entsprechend elektrische Datensignale umzuwandeln.

In der Ausführungsform in Fig. 3 ist entlang des drahtlosen Übertragungsteilpfads 2020 zwischen der ersten optischen Transceivereinheit 601 und der zweiten optischen Transceivereinheit 602 ein Lichtleiter 2320 ausgebildet. Über den Lichtleiter 2320 können die ausgesendeten Lichtsignale entlang des drahtlosen Übertragungsteilpfads 2020 zwischen der ersten optischen Transceivereinheit 601 und der zweiten optischen Transceivereinheit 602 ausgetaucht werden. Der Lichtleiter 2320 kann als ein entsprechendes Lichtleiterkabel ausgebildet sein. Alternativ kann der Lichtleiter 2320 als ein transparenter Vollkörper, beispielsweise ein Glaskörper oder transparenter Kunststoffkörper ausgebildet sein. Alternativ kann anstelle eines Lichtleiters 2320 ein Hohlkörper, wie ein Rohr oder ähnliches den drahtlosen Übertragungsteilpfad 2020 bilden, so dass die als Lichtsignale ausgebildeten Datensignale durch die in dem Rohr befindliche Luft übertragen werden. Beispielweise kann das Rohr eine reflektierende Innenbeschichtung aufweisen.

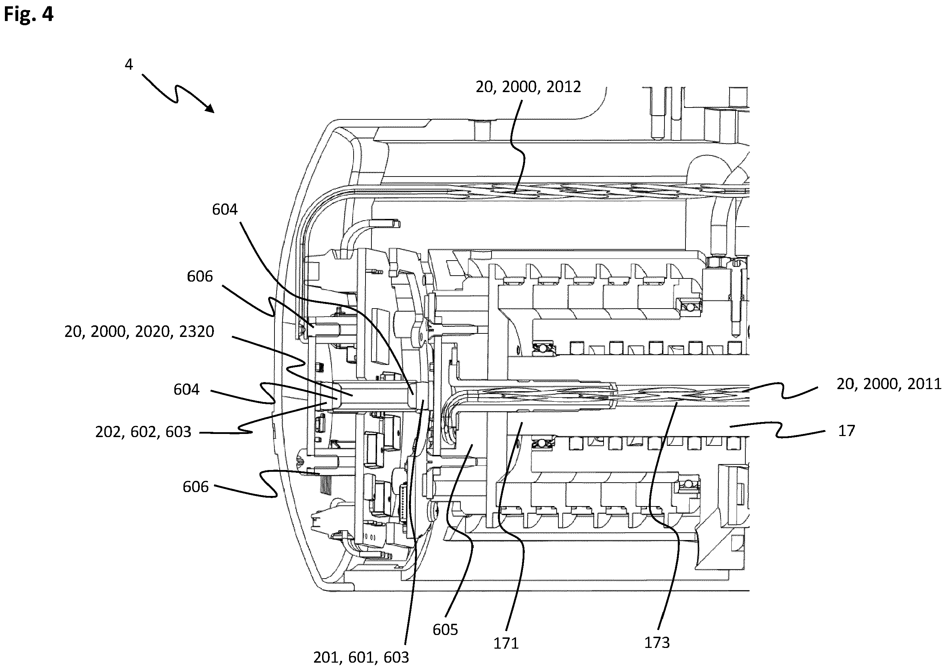

Fig. 4 zeigt einen Ausschnitt der Seitenschnittansicht des Armmoduls 4 in Fig. 3.

In Fig. 4 ist das der ersten Anschlussseite 11 gegenüberliegende Ende des Armmoduls 4 in Fig. 3 dargestellt.

Die erste Drahtlostransceivereinheit 201, die als erste optische Transceivereinheit 601 ausgebildet ist, ist über eine erste Aufhängung 605 drehfest am Wellenende 171 der Antriebswelle 17 angeordnet. Die zweite Drahtlostransceivereinheit 202, die als zweite optische Transceivereinheit 602 ausgebildet ist, ist über eine zweite Aufhängung 606 drehfest am Gehäuse 10 angeordnet.

Die erste optische Transceivereinheit 601 und die zweite optische Transceivereinheit 602 weisen jeweils einen optischen Transceiver-Chip 603 und eine Linseneinheit 604 auf. Der optische Transceiver-Chip 603 ist eingerichtet, elektrische Datensignale in entsprechende Lichtsignale umzuwandeln und diese auszusenden bzw. Lichtsignale zu empfangen und in entsprechende elektrische Signale umzuwandeln. Der optische Transceiver-Chip 603 ist für eine volle Duplexdatenübertragung eingerichtet. Über die Linseneinheit 604 kann eine Fokussierung der auszusenden Lichtsignale erreicht werden und eine Übertragung der Lichtsignale maximiert werden.

Über die beiden optischen Transceiver-Chips 603 der ersten Drahtlostransceivereinheit 201 und der zweiten Drahtlostransceivereinheit 202 können Lichtsignale in einer Voll-Duplex Übertragung ausgesendet und empfangen werden. Hierzu umfassen die optischen Transceiver-Chips 603 jeweils wenigstens eine Sendeeinheit und wenigstens eine Empfangseinheit um Aussenden und Empfangen entsprechender Lichtsignale.

Die zur Datenübertragung ausgesendeten und empfangenen Lichtsignale können beispielsweise eine Wellenlänge von 850 nm aufweisen. Eine Datenübertragung kann beispielsweise eine Übertragungsrate von 5 Gbit/s erreichen. Die genannten Zahlenwerte dienen lediglich als beispielhafte Ausführungsformen der vorliegenden Erfindung, die durch diese nicht beschränkt sein soll.

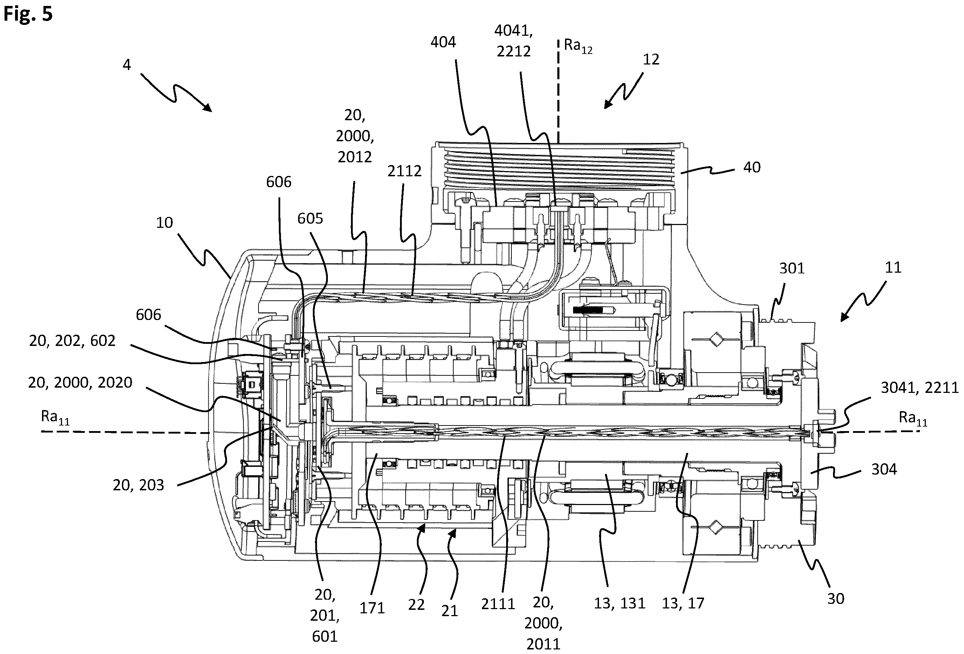

Fig. 5 zeigt eine Seitenschnittansicht des Armmoduls 4 in Fig. 2, gemäß einer weiteren Ausführungsform.

Die Ausführungsform in Fig. 5 basiert auf der Ausführungsform in Fig. 3. Die Ausführungsform in Fig. 5 unterscheidet sich von der Ausführungsform in Fig. 3 dadurch, dass die zweite Drahtlostransceivereinheit 202 nicht auf der ersten Rotationsachse Ra₁₁ angeordnet ist, sondern versetzt zu dieser angeordnet ist und einen Winkel zur ersten Rotationsachse Ra₁₁ aufweist. In der Ausführungsform in Fig. 5 ist die zweite Drahtlostransceivereinheit 202 rechtwinklig zur ersten Rotationsachse Ra₁₁ und damit zur ersten Drahtlostransceivereinheit 201 angeordnet. Die zweite Drahtlostransceivereinheit 202 kann aber auch in einem stumpferen oder spitzeren Winkel zur ersten Drahtlostransceivereinheit 201 angeordnet sein.

Darüber hinaus weist die rotationskompatible Datenübertragungseinrichtung 20 eine Umlenkeinrichtung 203 auf, die der ersten Drahtlostransceivereinheit 201 gegenüberliegend auf der ersten Rotationsachse Ra₁₁ angeordnet ist. Die Umlenkeinrichtung 203 ist eingerichtet, die Datensignale drahtlos zwischen der ersten Drahtlostransceivereinheit 201 und der zweiten Drahtlostransceivereinheit 202 abzulenken. Durch die Umlenkeinrichtung 203 ist der drahtlose Übertragungsteilpfad 2020 in zwei rechtwinklig angeordnete Abschnitte aufgeteilt, von denen einer auf der ersten Rotationsachse Ra₁₁ positioniert und der andere zu dieser rechtwinklig orientiert ist, sodass eine Datenübertragung zwischen der ersten Drahtlostransceivereinheit 201 und der zweiten Drahtlostransceivereinheit 202 über eine Umlenkung durch die Umlenkeinrichtung 203 erfolgt.

Bei einer Ausbildung der ersten Drahtlostransceivereinheit 201 als erste optische Transceivereinheit 601 und der zweiten Drahtlostransceivereinheit 202 als zweite optische Transceivereinheit 602 kann die Umlenkeinrichtung 203 beispielsweise als eine Spiegeleinheit ausgebildet sein, die eingerichtet ist, entsprechende Lichtsignale zu reflektieren und zwischen der ersten optischen Transceivereinheit 601 und der zweiten optischen Transceivereinheit 602 zu übertragen.

In der Ausführungsform in Fig. 5, wie auch in den Ausführungsformen der Figuren 3 und 4, sind die erste Übertragungsleitung 2111 und die zweite Übertragungsleitung 2112 als eine Mehrzahl verdrillter Übertragungsadern ausgebildet

Über die gewinkelte Anordnung der zweiten Drahtlostransceivereinheit 202 zur ersten Drahtlostransceivereinheit 201 und zur ersten Rotationsachse Ra₁₁ kann über die Anordnung der Umlenkeinrichtung 203 die Länge des drahtlosen Übertragungsteilpfads 2020 bei einer geringen räumlichen Entfernung der ersten Drahtlostransceivereinheit 201 und der zweiten Drahtlostransceivereinheit 202 zueinander vergrößert werden. Hierdurch kann eine Fehleranfälligkeit der Datenübertragung zwischen der ersten Drahtlostransceivereinheit 201 und der zweiten Drahtlostransceivereinheit 202 verringert werden. Ferner kann durch die gewinkelte Anordnung der beiden Drahtlostransceivereinheiten eine Baugröße der rotationskompatiblen Datenübertragungseinrichtung 20 verringert werden, dadurch, dass die erste Drahtlostransceivereinheit 201 und die zweite Drahtlostransceivereinheit 202 in einem verringerten Bauraum angeordnet werden können.

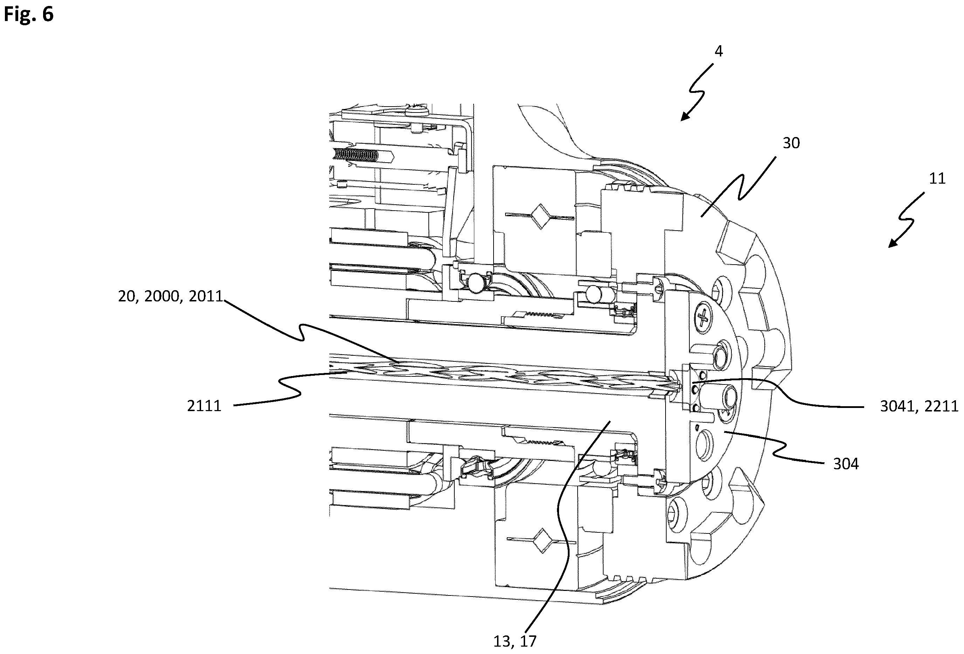

Fig. 6 zeigt eine Seitenschnittansicht einer ersten Anschlussseite 11 des Armmoduls 4 in Fig. 3 und Fig. 5.

In der Ausführungsform in Fig. 6 ist die erste Datenschnittstelleneinrichtung 3041 als eine erste Kontaktierungseinheit 2211 ausgebildet. Die erste Kontaktierungseinheit 2211 ist in die erste Kontakteinrichtung 304 der ersten Anschlusseinrichtung 30 zentral eingelassen und mit den verdrillten Adern der ersten Übertragungsleitung 2111 verbunden. Die erste Kontaktierungseinheit 2211 ist zentral an der ersten Kontakteinrichtung 304 auf der ersten Rotationsachse Ra₁₁, die in Fig. 6 nicht dargestellt ist, angeordnet.

Analog zu der in Fig. 6 dargestellten Anordnung der ersten Kontaktierungseinheit 2211 ist die zweite Datenschnittstelleneinrichtung 4041 in der Ausführungsform als zweite Kontaktierungseinheit 2212 an der zweiten Kontakteinrichtung 404 der zweiten Anschlusseinrichtung 40 angeordnet.

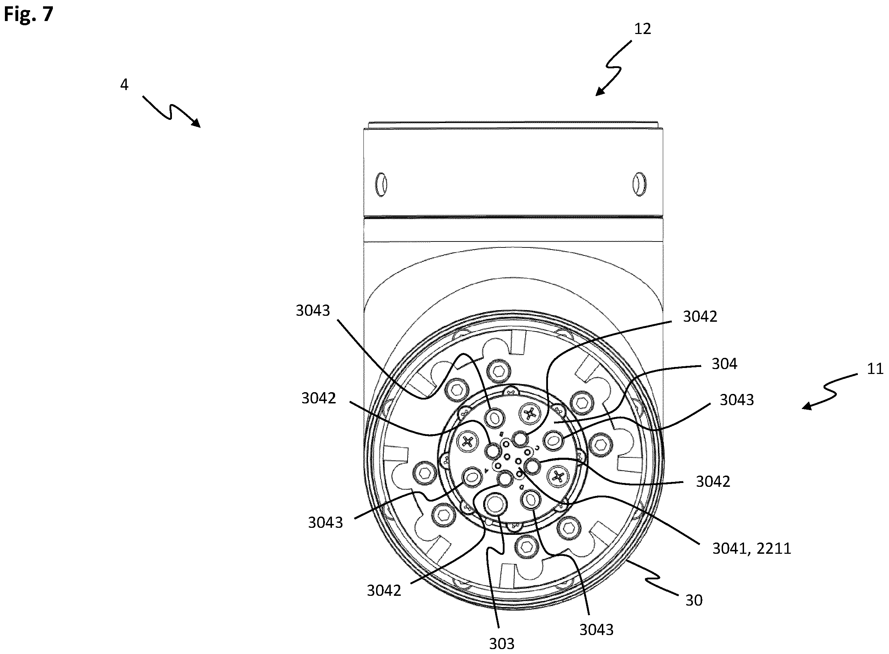

Fig. 7 zeigt eine Frontalansicht der ersten Anschlussseite 12 des Armmoduls 4 in Fig. 3 und Fig. 5.

In der Ausführungsform in Fig. 7 ist die erste Kontaktierungseinheit 2211 zentral an der ersten Kontakteinrichtung 304 angeordnet. Die erste Kontaktierungseinheit 2211 weist eine abgerundete X-Form auf und ist von den vier ersten elektrischen Schnittstelleneinrichtungen 3042 umgeben.

Analog zu der in Fig. 7 gezeigten Anordnung der ersten Kontaktierungseinheit 2211 ist die zweite Kontaktierungseinheit 2212 an der zweiten Kontakteinrichtung 404 der zweiten Anschlusseinrichtung 40 angeordnet.

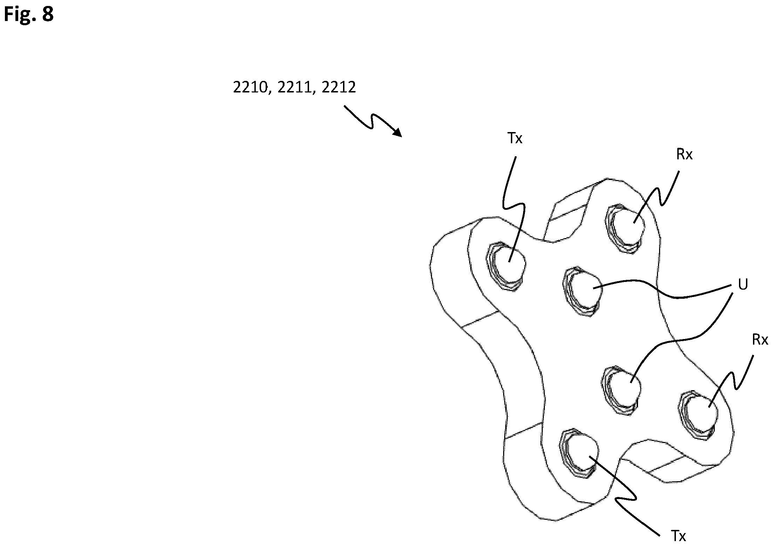

Fig. 8 zeigt eine perspektivische Ansicht einer Kontaktierungseinheit 2210 gemäß einer Ausführungsform.

In der Ausführungsform in Fig. 8 weist die dargestellte Kontaktierungseinheit 2210 eine abgerundete X-Form auf. Ferner weist die Kontaktierungseinheit 2210 zwei Sendekanäle Tx und zwei Empfangskanäle Rx und zwei Spannungskanäle U auf. Über eine Verkabelung mittels sechs verdrillter Leitungsadern der ersten Übertragungsleitung 2111 oder zweiten Übertragungsleitung 2112 ist somit eine Datenschnittstelleneinrichtung ermöglicht, über die im Vollduplexverfahren simultanes Senden und Empfangen entsprechender Datensignale ermöglicht ist.

Abweichend zu der in Fig. 8 dargestellten Ausführungsform kann die Kontaktierungseinheit 2210 eine andere Form aufweisen beziehungsweise eine andere Anzahl von Sende- und Empfangskanälen umfassen.

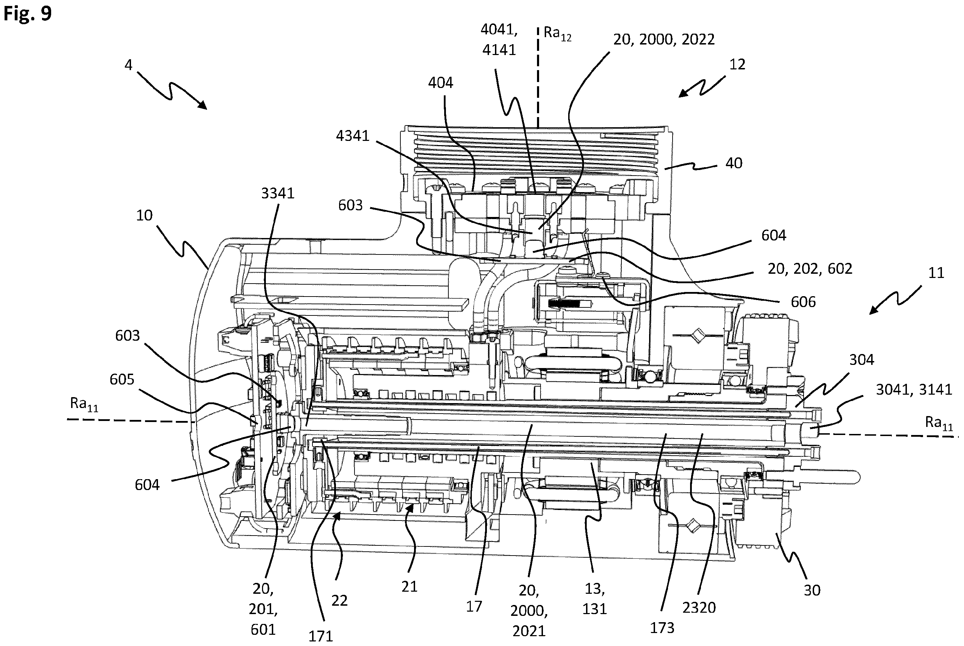

Fig. 9 zeigt eine Seitenschnittansicht des Armmoduls 4 in Fig. 2, gemäß einer weiteren Ausführungsform.

Abweichend zu den in den Figuren 3 bis 7 dargestellten Ausführungsformen sind in der Ausführungsform der Fig. 9 die erste Drahtlostransceivereinheit 201 und die zweite Drahtlostransceivereinheit 202 jeweils drehfest am Gehäuse 10 angeordnet. Darüber hinaus sind die erste Drahtlostransceivereinheit 201 und die zweite Drahtlostransceivereinheit 202 abweichend zu den in den Figuren 3 bis 7 dargestellten Ausführungsformen in der Ausführungsform in Fig. 9 nicht einander zugewandt angeordnet. Stattdessen ist die erste Drahtlostransceivereinheit 201 dem Wellenende 171 der Antriebswelle 17 benachbart angeordnet und dem Wellenende 171 und damit der ersten Anschlusseinrichtung 30 zugewandt orientiert. Die zweite Drahtlostransceivereinheit 202 ist der zweiten Anschlusseinrichtung 40 benachbart und zugewandt angeordnet.

Die erste Drahtlostransceivereinheit 201 ist auf der ersten Rotationsachse Ra₁₁ der ersten Anschlussseite 11 angeordnet. Die zweite Drahtlostransceivereinheit 202 ist auf der zweiten Rotationsachse Ra₁₂ der zweiten Anschlussseite 12 angeordnet. Die erste Drahtlostransceivereinheit 201 und die zweite Drahtlostransceivereinheit 202 sind über einen drahtgeführten Übertragungsteilpfad 2010 miteinander verbunden. Der drahtgeführte Übertragungsteilpfad 2010 ist in Fig. 9 nicht dargestellt, kann in der in Fig. 9 dargestellten Ausführungsform des Armmoduls 4 jedoch gemäß den oben dargestellten Ausführungsformen als eine Übertragungsleitung 2110 mit mehreren verdrillten Leitungsadern ausgebildet sein.

Die erste Drahtlostransceivereinheit 201 ist über eine erste Aufhängung 605 drehfest an dem Gehäuse 10 angeordnet. Die zweite Drahtlostransceivereinheit 202 ist über eine zweite Aufhängung 606 drehfest am Gehäuse 10 angeordnet.

In der Ausführungsform in Fig. 9 umfasst der Übertragungspfad 2000 der rotationskompatiblen Datenübertragungseinrichtung 20 einen ersten drahtlosen Übertragungsteilpfad 2021 und einen zweiten drahtlosen Übertragungsteilpfad 2022. Der erste drahtlose Übertragungsteilpfad 2021 ist zwischen der ersten Drahtlostransceivereinheit 201 und der ersten Datenschnittstelleneinrichtung 3041 der ersten Kontakteinrichtung 304 der ersten Anschlusseinrichtung 30 definiert. Der zweite drahtlose Übertragungsteilpfad 2022 ist zwischen der zweiten Drahtlostransceivereinheit 202 und der zweiten Datenschnittstelleneinrichtung 4041 der zweiten Kontakteinrichtung 404 der zweiten Anschlusseinrichtung 40 definiert.

Der erste drahtlose Übertragungsteilpfad 2021 führt zwischen der ersten Drahtlostransceivereinheit 201 und der ersten Datenschnittstelleneinrichtung 3041 durch die zentrale Längsdurchgangsausnehmung 173 der Antriebswelle 17 hindurch. Der erste drahtlose Übertragungsteilpfad 2021 ist somit auf der ersten Rotationsachse Ra₁₁ positioniert.

Die erste Datenschnittstelleneinrichtung 3041 ist als erste drahtlose Datenschnittstelleneinrichtung 3141 ausgebildet. Die erste drahtlose Datenschnittstelleneinrichtung 3141 ist insbesondere als ein röhrenförmiger Hohlzylinder ausgebildet, der formschlüssig an die zentrale Längsdurchgangsausnehmung 173 der Antriebswelle 17 anschließt.

Die zweite Datenschnittstelleneinrichtung 4041 ist als eine zweite drahtlose Datenschnittstelleneinrichtung 4141 ausgebildet. Analog zur ersten drahtlosen Datenschnittstelleneinrichtung 3141 ist die zweite drahtlose Datenschnittstelleneinrichtung 4141 ebenfalls als röhrenförmiger Hohlzylinder ausgebildet.

Die erste drahtlose Datenschnittstelleneinrichtung 3141 und die zweite drahtlose Datenschnittstelleneinrichtung 4141 zweier koppelbarer Armmodule 4 können mittels einer Steckverbindung miteinander verbunden werden, um eine drahtlose Datenübertragung zwischen einer ersten Drahtlostransceivereinheit 201 eines der koppelbaren Armmodule 4 und einer zweiten Drahtlostransceivereinheit 202 des jeweils anderen koppelbaren Armmoduls 4 zu ermöglichen.

Analog zu den Ausführungsformen in Fig. 3 bis Fig. 7 ist die erste Drahtlostransceivereinheit 201 als eine erste optische Transceivereinheit 601 ausgebildet und ist die zweite Drahtlostransceivereinheit 202 als eine zweite optische Transceivereinheit 602 ausgebildet. Die erste optische Transceivereinheit 601 und die zweite optische Transceivereinheit 602 weisen hierzu jeweils einen optischen Transceiver-Chip 603 und eine Linseneinheit 604 auf.

Am Wellenende 171 der Antriebswelle 17 ist ferner eine erste Übertragungshülse 3341 benachbart zur ersten optischen Transceivereinheit 601 angeordnet. Mittels der ersten Übertragungshülse 3341 ist eine Bündelung der von der ersten Drahtlostransceivereinheit 201 drahtlos ausgesendeten Datensignale in die zentrale Längsdurchgangsausnehmung 173 erreicht.

Ferner weist die zweite drahtlose Datenschnittstelleneinrichtung 4141 eine zweite Übertragungshülse 4341 auf, die benachbart zur zweiten Drahtlostransceivereinheit 202 angeordnet ist und eine Bündelung der von der zweiten Drahtlostransceivereinheit 202 drahtlos ausgesendeten Datensignale in die zweite drahtlose Datenschnittstelleneinrichtung 4141 ermöglicht.

In der Ausführungsform in Fig. 9 kann die zentrale Längsdurchgangsausnehmung 173 einen Lichtleiter 2320 aufweisen. Der Lichtleiter 2320 kann beispielsweise als ein entsprechend ausgestaltetes Lichtleiterkabel ausgebildet sein. Alternativ kann der Lichtleiter 2320 ein transparenter Vollkörper, beispielsweise ein Glaskörper bzw. transparenter Kunststoffkörper sein.

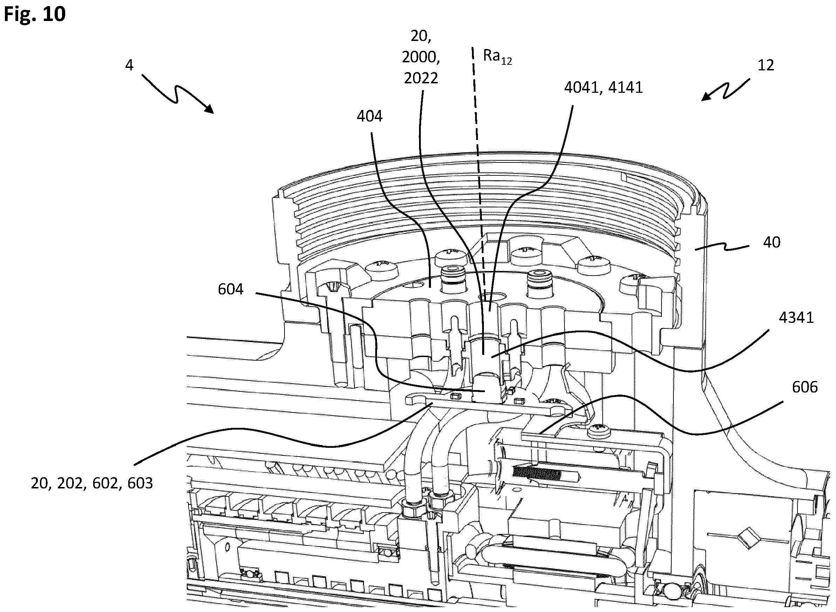

Fig. 10 zeigt eine Seitenschnittansicht einer zweiten Anschlussseite 12 des Armmoduls 4 in Fig. 9.

In Fig. 10 ist die zweite drahtlose Datenschnittstelleneinrichtung 4141 mit der zweiten Übertragungshülse 4341 als röhrenförmiger Hohlkörper dargestellt, der formschlüssig an die Linseneinheit 604 der zweiten optischen Transceivereinheit 602 angrenzt. Die zweite drahtlose Datenschnittstelleneinrichtung 4141 ist auf der zweiten Rotationsachse Ra₁₂ angeordnet, sodass eine drahtlose Datenübertragung entlang der zweiten Rotationsachse Ra₁₂ ermöglicht ist.

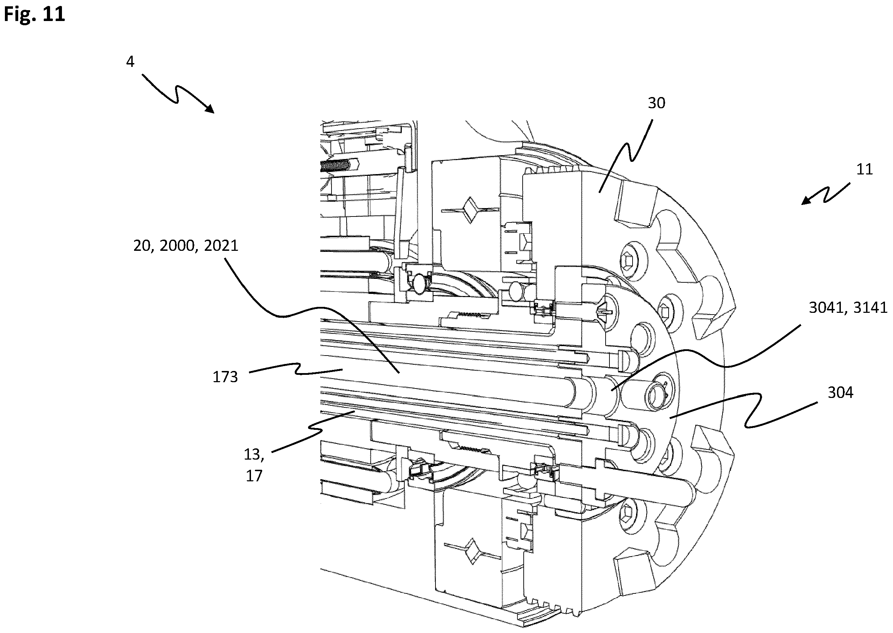

Fig. 11 zeigt eine Seitenschnittansicht einer ersten Anschlussseite 11 des Armmoduls 4 in Fig. 9.

In Fig. 11 ist die erste drahtlose Datenschnittstelleneinrichtung 3141 als röhrenförmiger Hohlkörper dargestellt, der formschlüssig an die zentrale Längsdurchgangsausnehmung 173 der Antriebswelle 17 anschließt. Über eine Kopplung zweier Armmodule 4 mittels der mechanischen Verbindung zwischen der ersten Kontakteinrichtung 304 des einen Armmoduls 4 und der zweiten Kontakteinrichtung 404 des jeweils anderen Armmoduls 4 kann eine formschlüssige Verbindung zwischen den beiden als röhrenförmige Hohlkörper ausgebildeten ersten drahtlosen Datenschnittstelleneinrichtung 3141 und zweiten drahtlosen Datenschnittstelleneinrichtung 4141 der beiden Armmodule 4 erzielt werden. Hierdurch kann eine drahtlose Datenübertragung zwischen der ersten Drahtlostransceivereinheit 201 des einen Armmoduls 4 und der zweiten Drahtlostransceivereinheit 202 des jeweils anderen Armmoduls 4 erreicht werden.

Durch die drehfeste Anordnung der ersten Drahtlostransceivereinheit 201 am Gehäuse 10 und durch die Ausrichtung der ersten Drahtlostransceivereinheit 201 in Richtung der ersten drahtlosen Datenschnittstelleneinrichtung 3141 bleibt eine drahtlose Datenübertragung zwischen der ersten Drahtlostransceivereinheit 201 und der ersten drahtlosen Datenschnittstelleneinrichtung 3141 bzw. einer zweiten Drahtlostransceivereinheit 202 eines weiteren angekoppelten Armmoduls 4 von der Rotation der Antriebswelle 17 unbeeinflusst. Hierdurch kann eine rotationskompatible Datenübertragung zwischen der ersten Anschlussseite 11 und der zweiten Anschlussseite 12 des Armmoduls 4 erreicht werden.

Alternativ zu den oben dargestellten Ausführungsformen können die erste Drahtlostransceivereinheit 201 als eine erste Antenneneinheit und die zweite Drahtlostransceivereinheit 202 als eine zweite Antenneneinheit ausgebildet sein. Die erste Antenneneinheit und die zweite Antenneneinheit können hierbei eingerichtet sein, Funksignale als Datensignale drahtlos auszusenden und zu empfangen. Die Anordnung der ersten Antenneneinheit und der zweiten Antenneneinheit innerhalb des Armmoduls 4 kann analog zu den oben dargestellten Ausführungsformen erfolgen.

### Bezugszeichenliste

- 1: Roboterbasis
- 2: Roboterarm
- 4: Armmodul
- 5: aktives Armmodul
- 5.1: erstes aktives Armmodul
- 5.2: zweites aktives Armmodul
- 5.3: drittes aktives Armmodul
- 5.4: viertes aktives Armmodul
- 5.5: fünftes aktives Armmodul
- 5.6: sechstes aktives Armmodul
- 6: passives Armmodul
- 6.1: erstes passives Armmodul
- 6.2: zweites passives Armmodul
- 7: distales Roboterarm-Ende
- 10: Gehäuse
- 11: erste Anschlussseite
- 12: zweite Anschlussseite
- 13: Antriebseinrichtung
- 17: Antriebswelle
- 20: rotationskompatible Datenübertragungseinrichtung
- 21: elektrische rotationskompatible Übertragungseinrichtung
- 22: fluidische rotationskompatible Übertragungseinrichtung
- 30: erste Anschlusseinrichtung
- 40: zweite Anschlusseinrichtung

- 131: Motoreinheit
- 171: Wellenende
- 173: Längsdurchgangsausnehmung

- 201: erste Drahtlostransceivereinheit
- 202: zweite Drahtlostransceivereinheit
- 203: Umlenkeinrichtung

- 301: Außengewinde
- 302: erste Stirnverzahnung
- 303: Zentrierstift
- 304: erste Kontakteinrichtung
- 305: erste mechanische Verbindungselemente

- 401: Befestigungsring
- 402: zweite Stirnverzahnung
- 403: Zentrieraufnahme
- 404: zweite Kontakteinrichtung
- 405: zweite mechanische Verbindungselemente

- 601: erste optische Transceivereinheit
- 602: zweite optische Transceivereinheit
- 603: optischer Transceiver-Chip
- 604: Linseneinheit
- 605: erste Aufhängung
- 606: zweite Aufhängung

- 2000: Übertragungspfad
- 2010: drahtgeführter Übertragungsteilpfad
- 2011: erster drahtgeführter Übertragungsteilpfad
- 2012: zweiter drahtgeführter Übertragungsteilpfad
- 2020: drahtloser Übertragungsteilpfad
- 2021: erster drahtloser Übertragungsteilpfad
- 2022: zweiter drahtloser Übertragungsteilpfad
- 2110: Übertragungsleitung
- 2111: erste Übertragungsleitung
- 2112: zweite Übertragungsleitung
- 2210: Kontaktierungseinheit
- 2211: erste Kontaktierungseinheit
- 2212: zweite Kontaktierungseinheit
- 2320: Lichtleiter

- Tx: Sendekanal
- Rx: Empfangskanal
- U: Spannungskanal
- 3041: erste Datenschnittstelleneinrichtung
- 3141: erste drahtlose Datenschnittstelleneinrichtung
- 3042: erste elektrische Schnittstelleneinrichtung
- 3043: erste fluidische Schnittstelleneinrichtung
- 3341: erste Übertragungshülse

- 4041: zweite Datenschnittstelleneinrichtung
- 4141: zweite drahtlose Datenschnittstelleneinrichtung
- 4042: zweite elektrische Schnittstelleneinrichtung
- 4043: zweite fluidische Schnittstelleneinrichtung
- 4341: zweite Übertragungshülse

- Ra: Rotationsachse
- Ra₁₁: erste Rotationsachse
- Ra₁₂: zweite Rotationsachse
- Ar: Axialrichtung
- Ar₁₁: erste Axialrichtung
- Ar₁₂: zweite Axialrichtung
- Rr: Radialrichtung
- Rr₁₁: erste Radialrichtung
- Rr₁₂: zweite Radialrichtung
- Ur: Umfangsrichtung
- Ur₁₁: erste Umfangsrichtung
- Ur₁₂: zweite Umfangsrichtung

## Patentansprüche

1. Armmodul (4) mit einem Gehäuse (10), das zumindest eine erste Anschlussseite (11) und zumindest eine zweite Anschlussseite (12) aufweist, wobei die erste Anschlussseite (11) relativ im Verhältnis zu der zweiten Anschlussseite (12) um eine Rotationsachse steuerbar verdrehbar ausgelegt ist und mit einer rotationskompatiblen Datenübertragungseinrichtung (20) für eine Übertragung von Datensignalen entlang eines Übertragungspfads (2000) zwischen der ersten Anschlussseite (11) und der zweiten Anschlussseite (12), wobei der Übertragungspfad (2000) wenigstens einen drahtlosen Übertragungsteilpfad (2020) zur drahtlosen Übertragung von Datensignalen und wenigstens einen drahtgeführten Übertragungsteilpfad (2010) zur drahtgeführten Übertragung von Datensignalen umfasst, wobei die rotationskompatible Datenübertragungseinrichtung (20) wenigstens eine erste Drahtlostransceivereinheit (201) und wenigstens eine zweite Drahtlostransceivereinheit (202) aufweist, die jeweils über den Übertragungspfad (2000) miteinander verbunden und eingerichtet sind, entlang des wenigstens einen drahtlosen Übertragungsteilpfads (2020) Datensignale drahtlos auszusenden und zu empfangen, **dadurch gekennzeichnet, dass** die erste Anschlussseite (11) eine rotierbare erste Anschlusseinrichtung (30) und die zweite Anschlussseite (12) eine gehäusefeste, also nicht rotierbare zweite Anschlusseinrichtung (40) aufweist, wobei die erste Anschlusseinrichtung (30) und die zweite Anschlusseinrichtung (40) für eine Kopplung des Armmoduls (4) mit einem weiteren Armmodul (4) ausgebildet sind, wobei die erste rotierbare Anschlusseinrichtung (30) drehfest mit einer Antriebswelle (17) einer Antriebseinrichtung (13) des Armmoduls (4) verbunden ist, und wobei die erste Anschlussseite (11) über die erste Anschlusseinrichtung (30) relativ zum Gehäuse (10) drehbar ist.

2. Armmodul (4) nach Anspruch 1, wobei die Antriebswelle (17) einen Abschnitt der rotationskompatiblen Datenübertragungseinrichtung (20) bildet, und wobei der wenigstens eine drahtlose Übertragungsteilpfad (2020) oder der wenigstens eine drahtgeführte Übertragungsteilpfad (2010) des Übertragungspfads (2000) der rotationskompatiblen Datenübertragungseinrichtung (20) durch eine zentrale Längsdurchgangsausnehmung (173) der Antriebswelle (17) geführt ist.

3. Armmodul (4) nach Anspruch 1 oder 2, wobei die Antriebswelle (17) ein der ersten Anschlusseinrichtung (30) der ersten Anschlussseite (11) gegenüberliegend angeordnetes Wellenende (171) aufweist, wobei die erste Drahtlostransceivereinheit (201) am Wellenende (171) der Antriebswelle (17) angeordnet ist, wobei die zweite Drahtlostransceivereinheit (202) drehfest am Gehäuse (10) angeordnet ist, und wobei der drahtlose Übertragungsteilpfad (2020) zwischen der ersten Drahtlostransceivereinheit (201) und der zweiten Drahtlostransceivereinheit (202) definiert ist.

4. Armmodul (4) nach Anspruch 3, wobei der Übertragungspfad (2000) wenigstens einen ersten drahtgeführten Übertragungsteilpfad (2011) und wenigstens einen zweiten drahtgeführten Übertragungsteilpfad (2012) umfasst, wobei der erste drahtgeführte Übertragungsteilpfad (2011) die erste Drahtlostransceivereinheit (201) mit der ersten Anschlusseinrichtung (30) der ersten Anschlussseite (11) verbindet, und wobei der zweite drahtgeführte Übertragungsteilpfad (2012) die zweite Drahtlostransceivereinheit (202) mit der zweiten Anschlusseinrichtung (40) der zweiten Anschlussseite (12) verbindet.

5. Armmodul (4) nach Anspruch 4, wobei der erste drahtgeführte Übertragungsteilpfad (2011) durch die zentrale Längsdurchgangsausnehmung (173) der Antriebswelle (17) verläuft.

6. Armmodul (4) nach Anspruch 5, wobei die erste Drahtlostransceivereinheit (201) und die zweite Drahtlostransceivereinheit (202) auf einer ersten Rotationsachse (Ra₁₁) der Antriebswelle (17) einander gegenüberliegend angeordnet sind, und wobei der drahtlose Übertragungsteilpfad (2020) parallel zur ersten Rotationsachse (Ra₁₁) orientiert ist.

7. Armmodul (4) nach Anspruch 5, wobei die erste Drahtlostransceivereinheit (201) auf einer ersten Rotationsachse (Ra₁₁) der Antriebswelle (17) angeordnet ist, wobei die zweite Drahtlostransceivereinheit (202) in einem Winkel zur ersten Rotationsachse (Ra₁₁) angeordnet ist, wobei die rotationskompatible Datenübertragungseinrichtung (20) eine auf der ersten Rotationsachse (Ra₁₁) angeordnete Umlenkeinrichtung (203) zum Ablenken von drahtlos übertragbaren Datensignalen aufweist, und wobei der drahtlose Übertragungsteilpfad (2020) zwischen der ersten Drahtlostransceivereinheit (201), der Umlenkeinrichtung (203) und der zweiten Drahtlostransceivereinheit (202) definiert ist.

8. Armmodul (4) nach einem der voranstehenden Ansprüche 5 bis 7, wobei der erste drahtgeführte Übertragungsteilpfad (2011) wenigstens eine erste Übertragungsleitung (2111) und wenigstens eine erste Kontaktierungseinheit (2211) umfasst, wobei der zweite drahtgeführte Übertragungsteilpfad (2012) wenigstens eine zweite Übertragungsleitung (2112) und wenigstens eine zweite Kontaktierungseinheit (2212) umfasst, wobei die erste Kontaktierungseinheit (2211) an der ersten Anschlusseinrichtung (30) angeordnet ist, und wobei die zweite Kontaktierungseinheit (2212) an der zweiten Anschlusseinrichtung (40) angeordnet ist.

9. Armmodul (4) nach einem der voranstehenden Ansprüche 5 bis 8, wobei die erste Kontaktierungseinheit (2211) und die zweite Kontaktierungseinheit (2212) jeweils wenigstens zwei Sendekanäle (Tx) und/oder wenigstens zwei Empfangskanäle (Rx) zum Senden und/oder Empfangen von Datensignalen umfassen, und wobei die erste Übertragungsleitung (2111) und die zweite Übertragungsleitung (2112) jeweils eine Mehrzahl verdrillter Leitungsadern aufweisen.

10. Armmodul (4) nach Anspruch 1 oder 2, wobei die Antriebswelle (17) ein der ersten Anschlusseinrichtung (30) der ersten Anschlussseite (11) gegenüberliegend angeordnetes Wellenende (171) aufweist, wobei die erste Drahtlostransceivereinheit (201) dem Wellenende (171) der Antriebswelle (17) gegenüberliegend drehfest am Gehäuse (10) angeordnet ist, wobei die zweite Drahtlostransceivereinheit (202) der zweiten Anschlusseinrichtung (40) gegenüberliegend drehfest am Gehäuse (10) angeordnet ist, und wobei der drahtgeführte Übertragungsteilpfad (2010) zwischen der ersten Drahtlostransceivereinheit (201) und der zweiten Drahtlostransceivereinheit (202) definiert ist.

11. Armmodul (4) nach Anspruch 10, wobei der Übertragungspfad (2000) wenigstens einen ersten drahtlosen Übertragungsteilpfad (2021) und wenigstens einen zweiten drahtlosen Übertragungsteilpfad (2022) umfasst, wobei der erste drahtlose Übertragungsteilpfad (2021) zwischen der ersten Drahtlostransceivereinheit (201) und einer ersten Datenschnittstelleneinrichtung (3041) der ersten Anschlusseinrichtung (30) definiert ist und durch die zentrale Längsdurchgangsausnehmung (173) der Antriebswelle (17) verläuft, wobei der zweite drahtlose Übertragungsteilpfad (2022) zwischen der zweiten Drahtlostransceivereinheit (202) und einer zweiten Datenschnittstelleneinrichtung (4041) der zweiten Anschlusseinrichtung (40) definiert ist, und wobei die erste Datenschnittstelleneinrichtung (3041) auf der ersten Rotationsachse (Ra₁₁) der ersten Anschlussseite (11) und die zweite Datenschnittstelleneinrichtung (4041) auf einer zweiten Rotationsachse (Ra₁₂) der zweiten Anschlussseite (12) angeordnet sind.

12. Armmodul (4) nach Anspruch 10 oder 11, wobei der drahtgeführte Übertragungsteilpfad (2010) durch eine Übertragungsleitung (2110) gebildet ist, und wobei die erste Drahtlostransceivereinheit (201) und die zweite Drahtlostransceivereinheit (202) über die Übertragungsleitung (2110) miteinander verbunden sind.

13. Armmodul (4) nach einem der voranstehenden Ansprüche 1 bis 12, wobei die erste Drahtlostransceivereinheit (201) und die zweite Drahtlostransceivereinheit (202) als eine erste optische Transceivereinheit (601) und eine zweite optische Transceivereinheit (602) ausgebildet sind, die eingerichtet sind, Lichtsignale als Datensignale drahtlos auszusenden und/oder zu empfangen, und wobei der drahtlose Übertragungsteilpfad (2020) durch einen Lichtleiter gebildet ist.

14. Armmodul (4) nach einem der voranstehenden Ansprüche 1 bis 12, wobei die erste Drahtlostransceivereinheit (201) und die zweite Drahtlostransceivereinheit (202) als eine erste Antenneneinheit und eine zweite Antenneneinheit ausgebildet sind, die eingerichtet sind, Funksignale als Datensignale drahtlos auszusenden und/oder zu empfangen.

15. Industrieroboter (1) mit wenigstens einem modularen Roboterarm (2), der eine Mehrzahl von Armmodulen (4) nach einem der Ansprüche 1 bis 14 aufweist.

## Claims

1. Arm module (4) having a housing (10), which has at least one first connection side (11) and at least one second connection side (12), wherein the first connection side (11) is designed to be controllably rotatable about an axis of rotation relative to the second connection side (12), and having a rotation-compatible data transmission device (20) for transmitting data signals along a transmission path (2000) between the first connection side (11) and the second connection side (12), wherein the transmission path (2000) comprises at least one wireless partial transmission path (2020) for wirelessly transmitting data signals and at least one wired partial transmission path (2010) for the wired transmission of data signals, wherein the rotation-compatible data transmission device (20) has at least one first wireless transceiver unit (201) and at least one second wireless transceiver unit (202) which are each connected to one another via the transmission path (2000) and are configured to wirelessly emit and receive data signals along the at least one wireless partial transmission path (2020), **characterized in that** the first connection side (11) has a rotatable first connection device (30) and the second connection side (12) has a second connection device (40), which is fixed to the housing, that is to say is non-rotatable, wherein the first connection device (30) and the second connection device (40) are designed for coupling the arm module (4) to a further arm module (4), wherein the first rotatable connection device (30) is connected in a rotationally fixed manner to a drive shaft (17) of a drive device (13) of the arm module (4), and wherein the first connection side (11) is rotatable relative to the housing (10) via the first connection device (30).

2. Arm module (4) according to Claim 1, wherein the drive shaft (17) forms a portion of the rotation-compatible data transmission device (20), and wherein the at least one wireless partial transmission path (2020) or the at least one wired partial transmission path (2010) of the transmission path (2000) of the rotation-compatible data transmission device (20) is guided through a central longitudinal passage recess (173) in the drive shaft (17).

3. Arm module (4) according to Claim 1 or 2, wherein the drive shaft (17) has a shaft (171), which is arranged opposite the first connection device (30) of the first connection side (11), wherein the first wireless transceiver unit (201) is arranged on the shaft end (171) of the drive shaft (17), wherein the second wireless transceiver unit (202) is arranged in a rotationally fixed manner on the housing (10), and wherein the wireless partial transmission path (2020) is defined between the first wireless transceiver unit (201) and the second wireless transceiver unit (202).

4. Arm module (4) according to Claim 3, wherein the transmission path (2000) comprises at least one first wired partial transmission path (2011) and at least one second wired partial transmission path (2012), wherein the first wired partial transmission path (2011) connects the first wireless transceiver unit (201) to the first connection device (30) of the first connection side (11), and wherein the second wired partial transmission path (2012) connects the second wireless transceiver unit (202) to the second connection device (40) of the second connection side (12).

5. Arm module (4) according to Claim 4, wherein the first wired partial transmission path (2011) runs through the central longitudinal passage recess (173) of the drive shaft (17).

6. Arm module (4) according to Claim 5, wherein the first wireless transceiver unit (201) and the second wireless transceiver unit (202) are arranged opposite each other on a first rotation axis (Ra₁₁) of the drive shaft (17), and wherein the wireless partial transmission path (2020) is oriented parallel to the first rotation axis (Ra₁₁).

7. Arm module (4) according to Claim 5, wherein the first wireless transceiver unit (201) is arranged on a first rotation axis (Ra₁₁) of the drive shaft (17), wherein the second wireless transceiver unit (202) is arranged at an angle to the first rotation axis (Ra₁₁), wherein the rotation-compatible data transmission device (20) has a deflection device (203), which is arranged on the first rotation axis (Ra₁₁), for diverting wirelessly transmittable data signals, and wherein the wireless partial transmission path (2020) is defined between the first wireless transceiver unit (201), the deflection device (203) and the second wireless transceiver unit (202) .

8. Arm module (4) according to one of the preceding Claims 5 to 7, wherein the first wired partial transmission path (2011) comprises at least one first transmission line (2111) and at least one first contact-making unit (2211), wherein the second wired partial transmission path (2012) comprises at least one second transmission line (2112) and at least one second contact-making unit (2212), wherein the first contact-making unit (2211) is arranged on the first connection device (30), and wherein the second contact-making unit (2212) is arranged on the second connection device (40).

9. Arm module (4) according to one of the preceding Claims 5 to 8, wherein the first contact-making unit (2211) and the second contact-making unit (2212) each comprise at least two transmission channels (Tx) and/or at least two reception channels (Rx) for sending and/or receiving data signals, and wherein the first transmission line (2111) and the second transmission line (2112) each have a plurality of twisted line cores.

10. Arm module (4) according to Claim 1 or 2, wherein the drive shaft (17) has a shaft end (171) which is arranged opposite the first connection device (30) of the first connection side (11), wherein the first wireless transceiver unit (201) is arranged in a rotationally fixed manner on the housing (10) opposite the shaft end (171) of the drive shaft (17), wherein the second wireless transceiver unit (202) is arranged in a rotationally fixed manner on the housing (10) opposite the second connection device (40), and wherein the wired partial transmission path (2010) is defined between the first wireless transceiver unit (201) and the second wireless transceiver unit (202).

11. Arm module (4) according to Claim 10, wherein the transmission path (2000) comprises at least one first wireless partial transmission path (2021) and at least one second wireless partial transmission path (2022), wherein the first wireless partial transmission path (2021) is defined between the first wireless transceiver unit (201) and a first data interface device (3041) of the first connection device (30) and runs through the central longitudinal passage recess (173) of the drive shaft (17), wherein the second wireless partial transmission path (2022) is defined between the second wireless transceiver unit (202) and a second data interface device (4041) of the second connection device (40), and wherein the first data interface device (3041) is arranged on the first rotation axis (Ra₁₁) of the first connection side (11) and the second date interface device (4041) are arranged on a second rotation axis (Ra₁₂) of the second connection side (12).

12. Arm module (4) according to Claim 10 or 11, wherein the wired partial transmission path (2010) is formed by a transmission line (2110), and wherein the first wireless transceiver unit (201) and the second wireless transceiver unit (202) are connected to one another via the transmission line (2110).

13. Arm module (4) according to one of the preceding Claims 1 to 12, wherein the first wireless transceiver unit (201) and the second wireless transceiver unit (202) are designed as a first optical transceiver unit (601) and a second optical transceiver unit (602), which are configured to wirelessly emit and/or receive light signals as data signals, and wherein the wireless partial transmission path (2020) is formed by a light guide.

14. Arm module (4) according to one of the preceding Claims 1 to 12, wherein the first wireless transceiver unit (201) and the second wireless transceiver unit (202) are designed as a first antenna unit and a second antenna unit which are configured to wirelessly emit and/or receive radio signals as data signals.

15. Industrial robot (1) having at least one modular robot arm (2), which has a plurality of arm modules (4) according to one of Claims 1 to 14.

## Revendications

1. Module de bras (4) comprenant un boîtier (10) et présentant au moins un premier côté de raccordement (11) et au moins un deuxième côté de raccordement (12), dans lequel le premier côté de raccordement (11) est conçu de manière à pouvoir tourner de façon commandée autour d'un axe de rotation par rapport au deuxième côté de raccordement (12), et comprenant un dispositif de transmission de données (20) compatible en rotation pour une transmission de signaux de données le long d'un chemin de transmission (2000) entre le premier côté de raccordement (11) et le deuxième côté de raccordement (12), dans lequel le chemin de transmission (2000) comprend au moins un chemin de transmission partiel sans fil (2020) pour la transmission sans fil de signaux de données et au moins un chemin de transmission partiel filaire (2010) pour la transmission filaire de signaux de données, dans lequel le dispositif de transmission de données (20) compatible en rotation présente au moins une première unité d'émission/réception sans fil (201) et au moins une deuxième unité d'émission/réception sans fil (202) qui sont respectivement reliées ensemble par le chemin de transmission (2000) et sont conçues pour émettre et recevoir sans fil des signaux de données le long dudit au moins un chemin de transmission partiel sans fil (2020),
**caractérisé en ce que** le premier côté de raccordement (11) présente un premier dispositif de raccordement rotatif (30) et le deuxième côté de raccordement (12) présente un deuxième dispositif de raccordement (40) fixé au boîtier, donc non rotatif, dans lequel le premier dispositif de raccordement (30) et le deuxième dispositif de raccordement (40) sont réalisés pour coupler le module de bras (4) à un autre module de bras (4), dans lequel le premier dispositif de raccordement rotatif (30) est relié de manière verrouillée en rotation à un arbre d'entraînement (17) d'un dispositif d'entraînement (13) du module de bras (4), et dans lequel le premier côté de raccordement (11) est rotatif par rapport au boîtier (10) par l'intermédiaire du premier dispositif de raccordement (30) .

2. Module de bras (4) selon la revendication 1, dans lequel l'arbre d'entraînement (17) constitue une partie du dispositif de transmission de données (20) compatible en rotation, et dans lequel ledit au moins un chemin de transmission partiel sans fil (2020) ou ledit au moins un chemin de transmission partiel filaire (2010) du chemin de transmission (2000) du dispositif de transmission de données (20) compatible en rotation passe par un évidement traversant longitudinal central (173) de l'arbre d'entraînement (17) .

3. Module de bras (4) selon la revendication 1 ou 2, dans lequel l'arbre d'entraînement (17) présente une extrémité d'arbre (171) disposée à l'opposé du premier dispositif de raccordement (30) du premier côté de raccordement (11), dans lequel la première unité d'émission/réception sans fil (201) est disposée à l'extrémité d'arbre (171) de l'arbre d'entraînement (17), dans lequel la deuxième unité d'émission/réception sans fil (202) est disposée de manière verrouillée en rotation sur le boîtier (10), et dans lequel le chemin de transmission partiel sans fil (2020) est défini entre la première unité d'émission réception sans fil (201) et la deuxième unité d'émission/réception sans fil (202).

4. Module de bras (4) selon la revendication 3, dans lequel le chemin de transmission (2000) comprend au moins un premier chemin de transmission partiel filaire (2011) et au moins un deuxième chemin de transmission partiel filaire (2012), dans lequel le premier chemin de transmission partiel filaire (2011) relie la première unité d'émission/réception sans fil (201) au premier dispositif de raccordement (30) du premier côté de raccordement (11), et dans lequel le deuxième chemin de transmission partiel filaire (2012) relie la deuxième unité d'émission/réception sans fil (202) au deuxième dispositif de raccordement (40) du deuxième côté de raccordement (12).

5. Module de bras (4) selon la revendication 4, dans lequel le premier chemin de transmission partiel filaire (2011) s'étend à travers l'évidement traversant longitudinal central (173) de l'arbre d'entraînement (17) .

6. Module de bras (4) selon la revendication 5, dans lequel la première unité d'émission/réception sans fil (201) et la deuxième unité d'émission/réception sans fil (202) sont disposées sur un premier axe de rotation (Ra₁₁) de l'arbre d'entraînement (17) à l'opposé l'une de l'autre, et dans lequel le chemin de transmission partiel sans fil (2020) est orienté en parallèle au premier axe de rotation (Ra₁₁).

7. Module de bras (4) selon la revendication 5, dans lequel la première unité d'émission/réception sans fil (201) est disposée sur un premier axe de rotation (Ra₁₁) de l'arbre d'entraînement (17), dans lequel la deuxième unité d'émission/réception sans fil (202) est disposée selon un angle par rapport au premier axe de rotation (Ra₁₁), dans lequel le dispositif de transmission de données (20) compatible en rotation présente un dispositif de renvoi (203) disposé sur le premier axe de rotation (Ra₁₁) pour dévier des signaux de données transmissibles sans fil, et dans lequel le chemin de transmission partiel sans fil (2020) est défini entre la première unité d'émission/réception sans fil (201), le dispositif de renvoi (203) et la deuxième unité d'émission/réception sans fil (202).

8. Module de bras (4) selon l'une quelconque des revendications précédentes 5 à 7, dans lequel le premier chemin de transmission partiel filaire (2011) comprend au moins une première ligne de transmission (2111) et au moins une première unité de mise en contact (2211), dans lequel le deuxième chemin de transmission partiel filaire (2012) comprend au moins une deuxième ligne de transmission (2112) et au moins une deuxième unité de mise en contact (2212), dans lequel la première unité de mise en contact (2211) est disposée sur le premier dispositif de raccordement (30), et dans lequel la deuxième unité de mise en contact (2212) est disposée sur le deuxième dispositif de raccordement (40).

9. Module de bras (4) selon l'une quelconque des revendications précédentes 5 à 8, dans lequel la première unité de mise en contact (2211) et la deuxième unité de mise en contact (2212) comprennent respectivement au moins deux canaux d'émission (Tx) et/ou au moins deux canaux de réception (Rx) pour émettre et/ou recevoir des signaux de données, et dans lequel la première ligne de transmission (2111) et la deuxième ligne de transmission (2112) présentent respectivement une pluralité de conducteurs de câble torsadés.

10. Module de bras (4) selon la revendication 1 ou 2, dans lequel l'arbre d'entraînement (17) présente une extrémité d'arbre (171) disposée à l'opposé du premier dispositif de raccordement (30) du premier côté de raccordement (11), dans lequel la première unité d'émission/réception sans fil (201) est disposée de manière verrouillée en rotation sur le boîtier (10) à l'opposé de l'extrémité d'arbre (171) de l'arbre d'entraînement (17), dans lequel la deuxième unité d'émission/réception sans fil (202) du deuxième dispositif de raccordement (40) est disposée de manière verrouillée en rotation sur le boîtier (10) à l'opposé du deuxième dispositif de raccordement (40), et dans lequel le chemin de transmission partiel filaire (2010) est défini entre la première unité d'émission/réception sans fil (201) et la deuxième unité d'émission/réception sans fil (202).

11. Module de bras (4) selon la revendication 10, dans lequel le chemin de transmission (2000) comprend au moins un premier chemin de transmission partiel sans fil (2021) et au moins un deuxième chemin de transmission sans fil (2022), dans lequel le premier chemin de transmission partiel sans fil (2021) est défini entre la première unité d'émission/réception sans fil (201) et un premier dispositif d'interface de données (3041) du premier dispositif de raccordement (30) et s'étend à travers l'évidement traversant longitudinal central (173) de l'arbre d'entraînement (17), dans lequel le deuxième chemin de transmission partiel sans fil (2022) est défini entre la deuxième unité d'émission/réception sans fil (202) et un deuxième dispositif d'interface de données (4041) du deuxième dispositif de raccordement (40), et dans lequel le premier dispositif d'interface de données (3041) est disposé sur le premier axe de rotation (Ra₁₁) du premier côté de raccordement (11) et le deuxième dispositif d'interface de données (4041) est disposé sur un deuxième axe de rotation (Ra₁₂) du deuxième côté de raccordement (12).

12. Module de bras (4) selon la revendication 10 ou 11, dans lequel le chemin de transmission partiel filaire (2010) est formé par une ligne de transmission (2110), et dans lequel la première unité d'émission/réception sans fil (201) et la deuxième unité d'émission/réception sans fil (202) sont reliées ensemble par la ligne de transmission (2110).

13. Module de bras (4) selon l'une quelconque des revendications précédentes 1 à 12, dans lequel la première unité d'émission/réception sans fil (201) et la deuxième unité d'émission/réception sans fil (202) sont réalisées comme une première unité d'émission/réception optique (601) et une deuxième unité d'émission/réception optique (602) qui sont conçues pour émettre et/ou recevoir sans fil des signaux lumineux comme signaux de données, et dans lequel le chemin de transmission partiel sans fil (2020) est formé par un guide de lumière.

14. Module de bras (4) selon l'une quelconque des revendications précédentes 1 à 12, dans lequel la première unité d'émission/réception sans fil (201) et la deuxième unité d'émission/réception sans fil (202) sont réalisées comme une première unité d'antenne et une deuxième unité d'antenne qui sont conçues pour émettre et/ou recevoir sans fil des signaux radio comme signaux de données.

15. Robot industriel (1) comprenant au moins un bras de robot modulaire (2) qui présente une pluralité de modules de bras (4) selon l'une quelconque des revendications 1 à 14.
